(19) Europäisches Patentamt
European Patent Office
Office européen des brevets

(11) **EP 3 134 368 B1**

(12) **EUROPÄISCHE PATENTSCHRIFT**

(45) Veröffentlichungstag und Bekanntmachung des Hinweises auf die Patenterteilung:
**12.08.2020 Patentblatt 2020/33**

(21) Anmeldenummer: **15719626.2**

(22) Anmeldetag: **09.04.2015**

(51) Int Cl.:
*C03C 17/00* (2006.01)  *B32B 7/06* (2019.01)
*B32B 17/06* (2006.01)  *B65H 18/28* (2006.01)

(86) Internationale Anmeldenummer:
**PCT/EP2015/057679**

(87) Internationale Veröffentlichungsnummer:
**WO 2015/162013 (29.10.2015 Gazette 2015/43)**

(54) **DÜNNGLASVERBUND UND VERFAHREN ZUM LAGERN EINER DÜNNGLASFOLIE**

THIN GLASS COMPOSITE AND METHOD FOR STORING A THIN GLASS FILM

COMPOSITE DE VERRE MINCE ET PROCÉDÉ DE STOCKAGE D'UN FILM DE VERRE MINCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2014 DE 102014207792**

(43) Veröffentlichungstag der Anmeldung:
**01.03.2017 Patentblatt 2017/09**

(73) Patentinhaber: **tesa SE**
**22848 Norderstedt (DE)**

(72) Erfinder:
• **SCHUH, Christian**
  **22767 Hamburg (DE)**
• **KEITE-TELGENBÜSCHER, Klaus**
  **22529 Hamburg (DE)**
• **CZESKI, Tanita**
  **22851 Norderstedt (DE)**

(56) Entgegenhaltungen:
DE-A1-102012 211 335  DE-A1-102012 215 149
JP-A- 2001 097 733  JP-A- 2011 168 423
US-A1- 2011 200 812  US-A1- 2013 196 163

**Beschreibung**

Die Erfindung betrifft einen aufrollbaren Dünnglasverbund mit einer Dünnglasfolie und mit wenigstens einer flächig auf wenigstens eine Seite der Dünnglasfolie aufgebrachten weiteren Schicht sowie ein Verfahren zum Lagern einer Dünnglasfolie.

Optoelektronische Anordnungen werden immer häufiger in kommerziellen Produkten verwendet oder stehen kurz vor der Markteinführung. Derartige Anordnungen umfassen anorganische oder organische elektronische Strukturen, beispielsweise organische, metallorganische oder polymere Halbleiter oder auch Kombinationen davon. Die entsprechenden Produkte sind je nach gewünschter Anwendung starr oder flexibel ausgebildet, wobei eine zunehmende Nachfrage nach flexiblen Anordnungen besteht. Die Herstellung derartiger Anordnungen erfolgt häufig durch Druckverfahren wie Hochdruck, Tiefdruck, Siebdruck, Flachdruck oder auch durch sogenanntes "non impact printing" wie etwa Thermotransferdruck, Tintenstrahldruck oder Digitaldruck. Vielfach werden aber auch Vakuumverfahren wie beispielsweise Chemical Vapor Deposition (CVD), Physical Vapor Deposition (PVD), plasmaunterstützte chemische oder physikalische Depositionsverfahren (PECVD), Sputtern, (Plasma-)Ätzen oder Bedampfung verwendet. Die Strukturierung erfolgt in der Regel durch Masken.

Als Beispiele für bereits kommerziell erhältliche oder in ihrem Marktpotential interessante optoelektronische Anwendungen seien hier elektrophoretische oder elektrochrome Aufbauten oder Displays, organische oder polymere Leuchtdioden (OLEDs oder PLEDs) in Anzeige- oder Displayvorrichtungen oder als Beleuchtung genannt, ferner können die Dünnglasfolien zur Abdeckung oder Umkapselung von Elektrolumineszenzlampen, lichtemittierenden elektrochemischen Zellen (LEECs), organischen Solarzellen wie Farbstoff- oder Polymersolarzellen, anorganischen Dünnschichtsolarzellen, zum Beispiel auf Basis von Silizium, Germanium-Kupfer, Indium oder Selen, oder Perowskitsolarzellen oder organischen Feldeffekttransistoren, organischen Schaltelementen, organischen optischen Verstärkern, organischen Laserdioden, organischen oder anorganischen Sensoren oder organisch oder anorganisch basierten RFID-Transpondern dienen.

Die Dünnglasfolien werden auf Rollen gerollt zur Verfügung gestellt. Aufgrund der Gefahr von Spannungsrisskorrosion sowie zur mechanischen Stabilisierung muss die Dünnglasfolie mit einer Schutzfolie geschützt und stabilisiert werden.

Wesentlich für den breiten Einsatz von Dünnglas auf einer Rolle sind stabilitätserhaltende Maßnahmen zur Vermeidung von Glaskorrosion. Bei der Glaskorrosion handelt es sich um ein Phänomen, das bewirkt, dass sich Risse in Silikatgläsern, die unter Spannung stehen, vergrößern. Die unter Zug oder Eigenspannung stehende Korrosion wird auch als statische Ermüdung oder Spannungsrisskorrosion bezeichnet. Sie resultiert aus dem langsamen Wachstum der bereits vorhandenen Mikrorisse im Material.

Chemisch ist für die Spannungsrisskorrosion die Wechselwirkung zwischen den gespannten Molekülen in der Rissspitze des Glases und den Wassermolekülen aus der Umgebungsluft verantwortlich.

Aus Siliziumoxiden bestehende Quarzgläser sind hochgradig homogen. Die Silikate sind in tetraedischen Einheiten zusammengesetzt und an ihren Ecken durch Siliziumoxidbindungen verbunden. Im atomaren Maßstab tragen die Siliziumoxidbindungen die Spannungen im Material, und der Bruch der Siliziumoxidbindungen ist ausschlaggebend und verantwortlich für den Rissfortgang im Material, die sogenannte Spannungsrisskorrosion. In der Rissspitze des Risses im Quarzglas werden hochkonzentrierte Dehnungsfelder erzeugt. Näherungswerte zeigen, dass die Brückenbindungen, also der Abstand der Silizium- und Sauerstoffatome der Siliziumoxidbindung eine Dehnung von mehr als 20 % erfährt. Die Wirkung dieser Dehnung an der verbrückenden Siliziumoxidbindung kann als verringerte Bindungsüberlappung angesehen werden. Die Silizium- und Sauerstoffatome der gedehnten Bindung bergen somit eine erhöhte Verfügbarkeit zur Bindung mit anderen Atomen. Insbesondere führt dieses zu einer Interaktion der gespannten Brückenbindung an der Rissspitze und einem Wassermolekül aus der Umgebung. Die Theorie der Spannungsrisskorrosion ist auch im Aufsatz "Stress-corrosion mechanism in silicate glasses" (Matteo Ciccotti, Journal of Physics D: applied Physics Vol. 42, 2009) dargestellt.

In einem ersten Schritt lagert sich ein Wassermolekül aus der Umgebung an eine gespannte verbrückende Si-O-Si-Bindung in der Rissspitze an. Das Wassermolekül lagert sich zuerst durch die Bildung einer Wasserstoffbrücke zwischen dem H (des Wasser) und dem O (Sauerstoff aus der Si-O-Si-Bindung) und dann durch Wechselwirkung der freien Elektronenpaare des O (des Wassers) mit dem Silizium an das Siliziumatom an. Die Orbitalwechselwirkung des freien Elektronenpaars kann sich entweder auf Van-der Waals-Anziehung oder eine kovalente Bindung mit unbesetzten Si-Orbitalen beziehen.

In einem zweiten Schritt tritt eine konzertierte Reaktion auf. Bei dieser Reaktion tritt ein Protonentransfer an das SO (Si-O) gleichzeitig mit einem Elektronentransfer von dem O (des Wassers) an das Silizium auf. Als Ergebnis dieser Reaktion werden zwei neue Bindungen gebildet, und zwar eine zwischen dem O (des Wassers) und dem Silizium und eine zwischen dem H (des Wassers) und dem O (des Si-O).

In einem dritten Schritt bricht die Bindung zwischen dem O (des Wassers) und dem übertragenen H (des Wassers), und es bilden sich Si-OH Gruppen an der Oberfläche. Da die Wasserstoffbindung relativ schwach ist, wird dieser Schritt unmittelbar nach dem Protonentransfer erwartet. Dabei handelt es sich um eine fortlaufende Reaktion im Glas, die zwischen dem Glas, das unter Spannung liegt, und dem Umgebungswasser abläuft. Der Mechanismus tritt auch in nicht reinen Silikatgläsern in gleicher oder ähnlicher Form auf.

Gerade die auf Rollen aufgerollten Dünnglasfolien stehen unter Spannung, die eine fortlaufende Rissbildung unterstützt. Aus dem Stand der Technik sind verschiedene Verfahren und Vorrichtungen bekannt, die eine Stabilisierung von Dünnglas ermöglichen.

In der WO 2011/084323 A1 wird ein Polymerglaslaminat zur Stabilisierung von Dünnglas und zur Versiegelung von Mikrorissen beschrieben. Dabei werden mikroskopische Strukturdefekte versiegelt. Ein alkoxysilanmodifiziertes Polyolefin versiegelt bei Kontakt mit dem Glas die Mikrorisse. Dabei wird der Mikroriss verfüllt und die Permeationsrate an der gesiegelten Stelle beträgt mindestens 90 % der Permeationsrate des unbeschädigten Materials. Es entsteht eine nicht reversible Verbindung des modifizierten Polyolefins zum Glas.

In der US 6,815,070 B1 ist ein Glas-Kunststoffverbund beschrieben für die Stabilisierung von Dünnglas. Die Beschichtung des Dünnglases geschieht durch Coating mit flüssigen Polymeren. Das Aufbringen der Polymerschicht geschieht durch Schleudern, Sprühen, Aufgießen, Aufwalzen oder Tauchen. Als Verwendung wird die Verkapselung von OLEDs angegeben. Nachteilig ist hier der aufwendige Prozess mit flüssigen Polymeren.

Aus der WO 2005/110741 A1 sind verschiedene Prozesse zur Herstellung von Glas-Polymerlaminaten beschrieben. Polymere werden in Form von Folien, Schmelzen, Lösungen, Zusammensetzungen verwendet. Aufgebracht werden die Polymere durch Kaschieren, Aufsprühen, Gießen, Tauchen, Laminieren wie auch Düsenbeschichtung.

In der DE 19 55 853 A1 ist ein Verbund einer Glasfolie mit ein- oder beidseitiger Kunststoffbeschichtung offenbart. Ziel ist es, einen Verbundwerkstoff zu schaffen, der auch unter Einfluss von Wärme Undurchlässigkeit für Gase und Wasserdampf sowie hohe Flexibilität aufweist. Es werden Herstellungsmöglichkeiten offenbart wie Extrusion der Polymere oder die Laminierung von Folien. Teilweise weisen die Folien Klebemasse und Haftvermittler auf und werden unter Anwendung von Wärme verpresst. Der Verbund dient der mechanischen Stabilisierung der Glasfolie.

In der EP 2 363 383 A1 ist ein Laminat aus dünnem Glas und verstärkenden Zwischenschichten aus thermoplastischem Harz offenbart. Die Harze sind durch Haftvermittler chemisch an das Glas gebunden. Es handelt sich um O-H-terminierte Polymere, die über die Epoxygruppen des Haftvermittlers an das Glas gebunden sind. Die verstärkende Eigenschaft des Harzes liegt damit direkt am Glas an und wird nicht durch weiches PSA unterbrochen. Das Glas ist beidseitig mit Haftvermittler und Harz beschichtet, und es ergibt sich ein komplexer Aufbau.

Aus der JP 2008 273 211 ist die Verstärkung eines Dünnglases, vorzugsweise 10 bis 70 $\mu$m, mittels Polymer, vorzugsweise 10 - 200 $\mu$m, bekannt, teilweise auch mit Haftvermittlern oder auch mit Klebemasse. Da Glas mit sinkender Dicke zwar umso flexibler wird, jedoch die Wasser- und Gasdurchlässigkeit steigt, soll durch die Harzbeschichtung des Dünnglases wieder eine gute Barriere zum Schutz der verkapselten, vorzugsweise organischen Elektronik hergestellt werden. Auch hier handelt es sich bei der Polymerschicht um eine mechanische Stabilisierung des Dünnglases.

In der DE 102 00 131 A1 sind biegeelastische Verbunde aus Glas mit mindestens einer polymerverstärkten Seite beschrieben. Es werden verschiedene Multilayeraufbauten offenbart, wobei dort auch mehrere Glas- und Polymerschichten in einem Laminat vorgesehen sind. Die Schichten sind durch Haftvermittler verbunden, die auch Haftkleber oder Verbindungen mit Silangruppen sein können. Durch Lamination bildet sich ein biegeelastischer Verbund aus. Auch hier ist nur die mechanische Stabilisierung des Glases durch einen Polymerfilm beschrieben.

In der EP 2 204 355 A1 sind verschiedene Prozesse zur Herstellung eines Dünnglases mit einer Polymerbeschichtung zur Stabilisierung des Dünnglases beschrieben. Es werden verschiedene Prozessmöglichkeiten für das Aufbringen des Polymers offenbart. Die Beschichtung findet direkt nach der Glasherstellung oder während der Glasherstellung statt, um eine Beschädigung des Dünnglases von vornherein zu vermeiden. Die Polymerschicht stabilisiert das Dünnglas. Auch hier wird nur eine mechanische Stabilisierung des Polymerfilms beschrieben.

Letztlich sind in der WO 2008/093153 A1 verschiedene Verfahren zur Herstellung von Dünnglas beschrieben. Dadurch sollen sehr breite Glasflächen hergestellt werden können. Es wird eine strangförmige Glasschmelze geblasen, wodurch sich das Glas dehnt, und der entstehende Schlauch wird zu einem Band geschnitten. Das Band wird mittels Walzen gestreckt. Es wird des Weiteren eine Inline-Polymerbeschichtung aus Polyamid und Acrylamid genannt. Zum einen wird die Beschichtung des Glasstranges vor dem Aufblasen offenbart, wobei das Polymer dann mitaufgeblasen wird, und zum anderen eine Beschichtung der entstehenden Dünnglashülle. Der Glasschlauch läuft durch einen Beschichtungsring und wird mit flüssigem Polymer beschichtet mit einer Dicke von 10 bis 150 $\mu$m. Die Polymerschutzschicht soll das Glas beim Gebrauch, vor allem beim Schneiden, schützen.

Es sind somit im Stand der Technik zwar verschiedene Verfahren zur Beschichtung von Dünnglas bekannt, die es ermöglichen, eine Dünnglasfolie mechanisch zu stabilisieren. Es besteht jedoch weiterhin das Problem der sich von selbst fortsetzenden Mikrorissbildung unter Spannung.

Es ist daher Aufgabe der vorliegenden Erfindung, einen Dünnglasverbund zur Verfügung zu stellen, der längere Lagerungszeiten unter Spannung, insbesondere im gerollten Zustand, ermöglicht, sowie ein Verfahren zur Lagerung einer Dünnglasfolie zur Verfügung zu stellen.

Die Aufgabe wird in ihrem ersten Aspekt durch einen eingangs genannten Dünnglasverbund mit den Merkmalen des Anspruchs 1 und in ihrem zweiten Aspekt durch ein eingangs genanntes Verfahren mit den Merkmalen des Anspruchs 12 gelöst.

Zunächst ist unter einer Folie ein flächenförmiges Gebilde zu verstehen, dessen Abmessungen in einer Raumrichtung, nämlich Dicke oder Höhe, signifikant kleiner sind als in den beiden anderen Raumrichtungen, die die Hauptausdehnung definieren, nämlich Länge und Breite. Die Folie kann einfach zusammenhängend oder auch durchbrochen ausgebildet sein. Sie kann aus einem einzigen Material oder aus bereichsweise unterschiedlichen Materialien bestehen. Die Folie kann über ihre gesamte Flächenausdehnung eine konstante Dicke oder aber auch unterschiedliche Dicken aufweisen. Die Folie kann aus einer einzigen Schicht bestehen oder aus mehreren Schichten, die deckungsgleich oder zumindest teilweise nicht überdeckend angeordnet sein können.

Unter einer Dünnglasfolie wird eine Folie mit einer Dicke von 15 bis 200 $\mu$m, vorzugsweise 20 bis 100 $\mu$m, vorzugsweise 25 bis 75 $\mu$m und besonders bevorzugt 30 bis 50 $\mu$m verstanden.

Günstigerweise handelt es sich bei der Dünnglasfolie um ein Borosilikatglas, beispielsweise das D 263 T ECO der Firma *Schott,* ein Alkalisilikatglas oder ein Aluminiumborosilikatglas, wie das AF 32 ECO, ebenfalls von der Firma *Schott.*

Günstigerweise ist die UV-Transmission bei alkalifreien Dünngläsern, wie beispielsweise dem AF 32 ECO, höher als bei alkalihaltigen Dünngläsern. Für UV-härtende Klebemittel können daher Initiatoren mit Absorptionsmaxima im UC-C-Bereich besser verwendet werden, wodurch die Stabilität des unvernetzten Klebemittels gegenüber Tageslicht erhöht wird.

Alkalihaltige Dünngläser wie D 263 T ECO weisen einen höheren Wärmeausdehnungskoeffizienten auf und passen daher mit möglicherweise polymeren Bestandteilen der Klebemittel- oder Trägermaterialschicht oder einer optoelektronischen Anordnung zusammen, auf denen der erfindungsgemäße Dünnglasverbund aufgebracht ist und deren Bauteile vom Dünnglasverbund eingekapselt werden.

Die Dünngläser können im Down-Draw-Prozess, wie er beispielsweise in der WO 00/41978 A1 offenbart ist, hergestellt werden oder in Verfahren, wie sie beispielsweise in der EP 1 832 558 A1 offenbart sind.

Dünnglasfolien oder Dünnglasverbünde werden vorzugsweise als aufgerollte Bänder zur Verfügung gestellt. Derartige Dünnglasfolien werden unter der Bezeichnung *Willow*® Gläser von der Firma *Corning* angeboten. Die Dünnglasfolien lassen sich günstigerweise mit bandförmig bereitgestellten Klebemassen, beispielsweise zur Verkapselung elektronischer Aufbauten, laminieren wie sie in der DE 10 2008 062 130 A1, DE 10 2008 047 964 A1, DE 10 2008 037 866 A1 und DE 10 2008 060 113 A1 sowie DE 10 2010 043 866 A1, DE 10 2010 043 871 A1, DE 10 2009 036 970 A1, DE 10 2008 061 840 A1 beschrieben sind.

Erfindungsgemäß wird der eingangs beschriebenen Spannungsrisskorrosion der aufgerollten Dünnglasfolie durch Wasser dadurch entgegengewirkt, dass auf eine radial äußere Seite der aufgerollten Dünnglasfolie, die besonders unter Zugspannung steht, die wenigstens eine weitere Schicht aufgebracht ist und die wenigstens eine weitere Schicht ein die Dünnglasfolie vor der Spannungsrisskorrosion schützendes Trocknungsmittel enthält. Unter der radial äußeren Seite ist hier die Seite der Dünnglasfolie zu verstehen, die im Querschnitt senkrecht zur Längsrichtung der Rolle, zu der die Dünnglasfolie aufgerollt ist, in radialer Richtung die Außenseite jeder der Folienlagen der Rolle darstellt. Im aufgerollten Zustand ist eine radial äußere Seite der Dünnglasfolie einer höheren intrinsischen Zugspannung ausgesetzt als eine radial innere Seite der Dünnglasfolie, die in der Regel einer Druckspannung ausgesetzt ist._Die radial äußere Seite ist damit in höherem Maße für Spannungsrisskorrosion anfällig als die radial innere Seite der Dünnglasfolie.

Erfindungsgemäß ist die das Trocknungsmittel enthaltende Schicht vorzugsweise flächig auf die äußere Seite der aufgerollten Dünnglasfolie aufgebracht und liegt damit in engem Kontakt an der durch die Zugspannung innerhalb der Dünnglasfolie stark beanspruchten Seite an.

Flächig beschichtet bedeutet dabei, dass ein im Wesentlichen geschlossener Film hergestellt wird, der keine gewollten, oft regelmäßigen, kleinräumigen Durchbrüche wie zum Beispiel eine Perforation oder ein Druckraster aufweist. Bezogen auf die Geometrie der Dünnglasfolie können aber Teilbereiche von der Beschichtung freigehalten werden. Flächig bedeutet also nicht, dass die gesamte Fläche des Dünnglasbandes oder -abschnitts beschichtet sein muss. Zum Beispiel können Teilbereiche am Rand für das Applizieren eines Kantenschutzes freigehalten werden. Besonders vorzugsweise ist die das Trocknungsmittel enthaltende Schicht vollflächig auf die radial äußere Seite der aufgerollten Dünnglasfolie aufgebracht. In diesem Fall ist die gesamte Fläche des Dünnglasbandes oder -abschnitts beschichtet.

Die wenigstens eine weitere Schicht kann eine, zwei oder eine höhere Anzahl an Klebemasseschichten und vorzugsweise zusätzlich eine, zwei oder eine höhere Anzahl an Trägermaterialschichten umfassen.

Das Trocknungsmittel bindet in den Dünnglasverbund eingedrungenes Wasser und verhindert damit ein Fortschreiten der Spannungsrisskorrosion.

Vorzugsweise weist der aufgerollte Dünnglasverbund über die gesamte Ausdehnung der Dünnglasfolie eine unmittelbar auf die Dünnglasfolie vollflächig aufgebrachte Klebeschicht und eine unmittelbar auf die Klebeschicht vollflächig aufgebrachte Trägermaterialschicht auf. Der Aufbau des Verbundes ist über seine gesamte Flächenausdehnung gleich und damit kostengünstig herstellbar und der aufgerollte Verbund leichter lagerbar.

Hinsichtlich des erfindungsgemäßen Verfahrens zum Lagern einer Dünnglasfolie wird eine Dünnglasfolie bereitgestellt, und auf wenigstens eine Seite der Dünnglasfolie wird flächig wenigstens eine weitere Schicht aufgebracht, der zuvor ein vor einer Spannungsrisskorrosion schützendes Trocknungsmittel zugeführt wird. Die mit der wenigstens einen weiteren Schicht versehene Dünnglasfolie wird derart aufgerollt, dass die wenigstens eine weitere Schicht auf einer radial äußeren Seite der aufgerollten Dünnglasfolie aufgebracht ist.

Dadurch ist es erfindungsgemäß möglich, den Dünnglasverbund aus der Dünnglasfolie und der wenigstens einen weiteren Schicht aufzurollen und dauerhaft zu lagern, ohne dass die Dünnglasfolie während der Lagerung durch Spannungsrisskorrosion unbrauchbar wird.

Als Trägermaterial der Trägermaterialschicht des erfindungsgemäßen Dünnglasverbundes können textile Flächengebilde, Papiere, kunststoffbeschichtete Papiere oder Folien eingesetzt werden, wobei Folien, insbesondere dimensionsstabile Kunststoff- oder Metallfolien, bevorzugt werden. Die Trägermaterialschicht beziehungsweise das Trägermaterial besteht daher bevorzugt aus Polyestern, insbesondere aus Polyethylenterephthalat, zum Beispiel aus biaxial verstrecktem Polyethylenterephthalat, oder aus Polyolefinen, insbesondere aus Polybuten, Cyclo-Olefin-Copolymer, Polymethylpenten, Polypropylen oder Polyethylen, zum Beispiel aus monoaxial verstrecktem Polypropylen, biaxial verstrecktem Polypropylen oder biaxial verstrecktem Polyethylen. Polyesterfolien weisen den Vorteil auf, dass sie für Temperaturstabilität sorgen und eine erhöhte mechanische Stabilität einbringen. Ganz besonders bevorzugt besteht daher die Trägerschicht beziehungsweise das Trägermaterial in dem im erfindungsgemäßen Verfahren eingesetzten Klebeband aus einer Polyesterfolie, beispielsweise aus biaxial verstrecktem Polyethylenterephthalat.

Weiter bevorzugt sind höher temperaturbeständige Polymerfolien aus der Gruppe der Polyimide, Polyethylennaphtalate, Polysulfone, Polyethersulfone, Polyetherketone oder Polyarylene, da diese bessere mechanische Eigenschaften bei der Verarbeitung des Dünnglasverbundes bei Temperaturen oberhalb von 150 °C, zum Beispiel bei der Beschichtung mit Indium-Zinn-Oxid (ITO) aufweisen.

In einer bevorzugten Ausführungsform enthält die wenigstens eine weitere Schicht eine Barrierefunktion. Die Barrierefunktion hindert ein oder mehrere spezifische(s) Permeat(e), insbesondere Wasserdampf, daran, in den Dünnglasverbund einzudringen, damit das im Klebeband befindliche Trocknungsmittel nicht schon während der Herstellung und/oder Lagerung des Klebebands durch aus der Umgebung eindiffundierendes Wasser teilweise oder sogar vollständig abgesättigt wird.

Vorzugsweise ist die Barrierefunktion durch eine Barriereschicht ausgebildet. Die Barriereschicht ist günstigerweise zwischen der Dünnglasfolie und der Klebemasseschicht oder zwischen der Trägerschicht und der Klebemasseschicht ausgebildet.

Eine derartige Barriereschicht kann aus organischen oder anorganischen Materialien bestehen, beispielsweise aus einer Metallschicht oder einer organischen Schicht oder einer Sol-Gel Schicht. Weiterhin schützt die Barrierefunktion das von Wasser zu befreiende Flächengebilde vor dem Eindiffundieren von Wasser aus der Umgebung.

Die Barriereschicht ist vorzugsweise an einer Innenseite, an der der Klebemasseschicht zugewandten Seite der Trägermaterialschicht vorgesehen, da damit die Barriereschicht vor mechanischer Beschädigung besser geschützt ist.

Besonders bevorzugt enthält das Trägermaterial mindestens eine anorganische Barriereschicht. Als anorganische Barriereschichten eignen sich besonders gut im Vakuum (zum Beispiel mittels Verdampfen, CVD, PVD, PECVD) oder unter Atmosphärendruck (zum Beispiel mittels Atmosphärenplasma, reaktiver Coronaentladung oder Flammenpyrolyse) abgeschiedene Metalle, wie Aluminium, Silber, Gold, Nickel oder insbesondere Metallverbindungen wie Metalloxide, -nitride oder -hydronitride, beispielsweise Oxide oder Nitride des Siliziums, des Bors, des Aluminiums, des Zirkoniums, des Hafniums oder des Tellurs oder Indium-Zinn-Oxid (ITO). Ebenfalls geeignet sind mit weiteren Elementen dotierte Schichten der vorstehend genannten Varianten.

Als besonders geeignetes Verfahren zum Aufbringen einer anorganischen Barriereschicht sind High-Power-Impulse-Magnetron-Sputtering und Atomic-Layer-Deposition zu nennen, durch die sich besonders permeationsdichte Schichten bei geringer Temperaturbelastung der Trägerschicht verwirklichen lassen. Bevorzugt wird eine Permeationsbarriere der Trägerschicht mit Barrierefunktion beziehungsweise des Verbundes aus Trägerschicht und Barriereschicht gegen Wasserdampf (WVTR) von < 1 g/(m$^2$*d) und/oder gegen Sauerstoff (OTR) von < 1 cm$^3$/(m$^2$*d*bar), wobei der Wert auf die jeweils im Flächengebilde verwendete Dicke der Trägerschicht bezogen ist, also nicht auf eine spezifische Dicke normiert ist. Die WVTR wird dabei bei 38° C und 90 % relativer Luftfeuchtigkeit nach ASTM F-1249 und die OTR bei 23° C und 50 % relativer Luftfeuchtigkeit nach DIN 53380-Teil 3 gemessen.

Zwischen der Dünnglasfolie und der Trägermaterialschicht ist bevorzugt wenigstens eine Klebemasseschicht vorgesehen. Vorzugsweise sind auch zwei oder eine höhere Anzahl an übereinander angeordneten Klebemasseschichten zwischen der Dünnglasfolie und der Trägermaterialschicht vorgesehen. Auch weitere Trägermaterialschichten sind denkbar.

Der Teilverbund aus Klebemasseschicht(en) und optional Trägermaterialschicht(en) wird im Folgenden auch als Klebeband oder Klebebandabschnitt bezeichnet. Das Klebeband besteht zumindest aus einer Schicht Klebemasse. Diese wird oft auf einem Trägermaterial bereitgestellt. Weitere Schichten, wie sie dem Fachmann im Bereich der Klebebänder geläufig sind, können ebenfalls enthalten sein, wie zum Beispiel weitere Klebstoff- oder Trägermaterialschichten, Primer oder Releaseschichten oder Schichten mit spezifischen physikalischen Funktionen, insbesondere optisch wirksame Schichten, permeationshemmende oder -fördernde Schichten, thermisch oder elektrisch leitfähige Schichten. Das Klebeband beziehungsweise der Klebebandabschnitt kann zum Beispiel als Blatt oder als Rolle oder als Stanzling zur Verfügung gestellt werden. Es kann die von seinem äußeren Umfang eingegrenzte Fläche vollständig bedecken oder auch Teile davon freilassen, wie zum Beispiel bei einem rahmenförmigen Stanzling oder einem perforierten Abschnitt.

Vorzugsweise ist die direkt auf der Glasfolie angeordnete Klebemasseschicht eine Haftklebemasseschicht oder eine aktivierbare Klebemasseschicht.

Als Haftklebemassen werden Klebemassen bezeichnet, deren abgebundener Film bei Raumtemperatur im trockenen Zustand permanent klebrig und klebfähig bleibt. Haftklebemassen erlauben bereits unter relativ schwachem Andruck eine dauerhafte Verbindung mit dem Haftgrund.

Vorzugsweise ist das auf der Trägermaterialschicht aufgebrachte Klebemittel eine Haftklebemasse oder eine aktivierbare Klebemasse. Besonders bevorzugt ist die auf der Trägermaterialschicht aufliegende Klebemasse eine Haftklebemasse.

Allgemein wird zwischen Haftklebemassen für permanente Anwendungen und für reversible Anwendungen (reversibel eingestellte Haftklebemassen) unterschieden. Während sich erstere in der Regel nur mit hohem Kraftaufwand und oft unter Zerstörung des Untergrunds oder des Klebebands selbst wieder ablösen lassen, können letztere mit relativ geringem Kraftaufwand und ohne Zerstörung des Haftgrunds in der Regel vollständig rückstandsfrei wieder abgelöst werden.

Erfindungsgemäß bevorzugt ist die auf dem Flächengebilde aufliegende Klebemasse des im erfindungsgemäßen Verfahren eingesetzten Klebebands reversibel eingestellt.

Die Reversibilität einer Haftklebemasse kann mittels ihrer viskoelastischen Eigenschaften beschrieben werden.

Ein Stoff wird bezüglich seiner viskoelastischen Eigenschaften im Allgemeinen als für Haftklebeanwendungen geeignet angesehen, wenn bei Raumtemperatur im Frequenzbereich von $10^0$ bis $10^1$ rad/s, idealerweise im Frequenzbereich von $10^{-1}$ bis $10^2$ rad/s, das Speichermodul G' im Bereich von $10^3$ bis $10^6$ Pa liegt und wenn das Verlustmodul G" ebenfalls in diesem Bereich liegt. Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstoffenster nach viskoelastischen Kriterien bezeichnen kann, gibt es wiederum unterschiedliche Sektoren beziehungsweise Quadranten, die die zu erwartenden Haftklebeeigenschaften der jeweils zugehörigen Stoffe näher charakterisieren. Nach Chang (J. Adhesion, 1991, vol. 34, Seiten 189 bis 200) sind reversible Haftklebemassen durch G' im Bereich von $10^3$ bis $3x10^4$ Pa und G" im Bereich von $10^3$ bis $3x10^4$ Pa jeweils bei Raumtemperatur und einer Messfrequenz von $10^{-2}$ rad/s charakterisiert.

Speichermodul und Verlustmodul für Haftklebemassen werden hierbei im oszillatorischen Scherexperiment (Dynamisch mechanische Analyse, DMA) unter Torsionsbelastung bei einer Temperatur von 23 °C und einer Frequenz von 0,01 rad/s bestimmt. Der Test dient der Untersuchung rheologischer Eigenschaften und ist in Pahl et al. "Praktische Rheologie der Kunststoffe und Elastomere", VDI-Verlag, 1995, Seite 57 bis 60 sowie 119 bis 127) ausführlich beschrieben. Der Test wird in einem schergeschwindigkeitskontrollierten Rheometer unter Torsionsbelastung gefahren, wobei eine Platte-Platte-Geometrie mit einem Plattendurchmesser von 25 mm verwendet wird.

Erfindungsgemäß bevorzugt wird eine Klebemasse allgemein dann als reversibel eingestellt angesehen, wenn sie eine Klebkraft auf Stahl von < 3 N/cm, bevorzugt von < 2,2 N/cm aufweist.

Erfindungsgemäß können alle dem Fachmann bekannten Haftklebemassen für den erfindungsgemäßen aufrollbaren Dünnglasverbund verwendet werden, also beispielsweise solche auf der Basis von Acrylaten und/oder Methacrylaten, Polyurethanen, Naturkautschuken, Synthesekautschuken; Styrolblockcopolymermassen mit einem Elastomerblock aus ungesättigten oder hydrierten Polydienblöcken wie zum Beispiel Polybutadien, Polyisopren, Copolymeren aus beiden, Polybutylen, insbesondere Polyisobutylen, sowie weiteren, dem Fachmann geläufigen Elastomerblöcken; Polyolefinen, insbesondere Poly-$\alpha$-olefinen und/oder Polyisobutylenen; Fluorpolymeren und/oder Silikonen. Unter den Begriff "Haftklebemasse" fallen auch weitere Massen, die haftklebende Eigenschaften entsprechend dem "Handbook of Pressure Sensitive Adhesive Technology" von Donatas Satas (Satas & Associates, Warwick 1999) besitzen.

Werden im Rahmen dieser Schrift Haftklebemassen auf Acrylbasis erwähnt, so sollen hiervon auch ohne explizite Erwähnung Haftklebemassen auf Basis von Methacrylaten und auf Basis von Acrylaten und Methacrylaten umfasst sein, sofern nicht ausdrücklich anders beschrieben.

Als aktivierbare Klebemassen werden Klebemassensysteme angesehen, bei denen die Herstellung einer Klebkraft überhaupt beziehungsweise die Erhöhung oder Erniedrigung der Klebkraft durch einen Energieeintrag, zum Beispiel durch aktinische Strahlung oder Wärme, oder eine stoffliche Wechselwirkung erfolgt. Die Aktivierung wird bevorzugt dazu verwendet, eine Reversibilität der Verklebung herzustellen, insbesondere dann, wenn eine Haftklebemasse vor ihrer Aktivierung nicht den reversiblen Haftklebemassen (Chang, J. Adhesion, 1991, vol. 34, Seiten 189 bis 200) zuzuordnen ist. Solche aktivierbaren Haftklebemassen sind beispielsweise aus dem Bereich der Grinding- und Dicing-Klebebänder, welche in der Waferbearbeitung eingesetzt werden, bekannt.

Als aktivierbare Klebemassen können grundsätzlich alle üblichen aktiviert verklebenden Klebemassensysteme zum Einsatz gelangen. Die Aktivierung erfolgt erfindungsgemäß bevorzugt in der Regel über einen Energieeintrag, zum Beispiel und besonders bevorzugt durch aktinische Strahlung oder Wärme (hitzeaktiviert entklebende Klebemassen).

Erfindungsgemäß werden auch sogenannte "autoadhäsive" Schichten als reversibel eingestellte Haftklebemassen angesehen. Autoadhäsive Schichten kommen zum Beispiel in Displayschutzfolien zum Einsatz. Sie zeigen nur sehr geringe oder gar keine Anfassklebrigkeit, sie haften jedoch insbesondere auf sehr glatten Flächen. Autoadhäsive Schichten sind beispielsweise in der WO 2005/044560 A1 oder der DE 197 42 805 A1 beschrieben.

Der erfindungsgemäße aufrollbare Dünnglasverbund umfasst bevorzugt wenigstens eine flächig auf der Dünnglasfolie aufgebrachte Klebemasseschicht und vorzugsweise wenigstens eine an der der Dünnglasfolie entgegengesetzten Seite der Klebemasseschicht angeordnete Trägermaterialschicht, wobei die wenigstens eine Klebemasseschicht und/oder die optionale Trägermaterialschicht ein Trocknungsmittel enthält.

Bevorzugt enthält die wenigstens eine Klebemasseschicht ein Trocknungsmittel, da sich hierbei das Trocknungsmittel direkt benachbart zur Glasoberfläche befindet und somit besonders wirksam ist.

Dabei kann zwischen der Dünnglasfolie und der Trägermaterialschicht eine das Trocknungsmittel enthaltende Klebemasseschicht vorgesehen sein. In einer anderen Ausführungsform der Erfindung sind weitere Schichten, wie beispielsweise weitere Klebemasseschichten, übereinander zwischen der Dünnglasfolie und der Trägermaterialschicht angeordnet und die das Trocknungsmittel enthaltende Schicht ist zwischen der Trägermaterialschicht und einer Klebemasseschicht, vorzugsweise Haftklebemasseschicht angeordnet.

Unter einem Trocknungsmittel wird hier ein Stoff verstanden, der zur Aufnahme (Sorption) von Wasser in der Lage ist. Die Sorption des Wassers durch das Trocknungsmittel kann dabei beispielsweise durch Absorption oder Adsorption erfolgen, wobei Adsorption sowohl in Form von Chemisorption als auch in Form von Physisorption auftreten kann. Das Trocknungsmittel ließe sich daher auch als "Sorbens" oder "Sorptionsmittel" bezeichnen.

Der aufrollbare Dünnglasverbund kann daher erfindungsgemäß durch das Trocknungsmittel Wasser aus der Trägermaterialschicht aufnehmen, aber auch Wasser aus der Dünnglasfolie heraus aufnehmen und durch die Dünnglasfolie und/oder die Trägermaterialschicht hindurchtretendes Wasser aufnehmen. Geeignete Trocknungsmittel sind beispielsweise Salze wie Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumdithionit, Natriumcarbonat, Natriumsulfat, Kaliumdisulfit, Kaliumcarbonat, Magnesiumcarbonat; Schichtsilikate wie Montmorillonit und Bentonit; Metalloxide wie Bariumoxid, Calciumoxid, Eisenoxid, Magnesiumoxid, Natriumoxid, Kaliumoxid, Strontiumoxid, Aluminiumoxid (aktiviertes Alumina) und Titandioxid; weiter Kohlenstoffnanoröhrchen, Aktivkohle, Phosphorpentoxid; leicht oxidierbare Metalle wie beispielsweise Eisen, Calcium, Natrium und Magnesium; Metallhydride wie beispielsweise Calciumhydrid, Bariumhydrid, Strontiumhydrid, Natriumhydrid und Lithiumaluminiumhydrid; Hydroxide wie Kaliumhydroxid und Natriumhydroxid; Metallkomplexe wie zum Beispiel Aluminiumacetylacetonat; weiterhin Kieselsäuren wie zum Beispiel Silica-Gel; Kieselgur; Zeolithe; des Weiteren organische Absorber, beispielsweise Polyolefin-Copolymere, Polyamid-Copolymere, PET-Copolyester, Anhydride von einfachen und mehrfachen Carbonsäuren wie Essigsäureanhydrid, Propionsäureanhydrid, Buttersäureanhydrid oder Methyltetrahydrophthalsäureanhydrid oder weitere auf Hybridpolymeren basierte Absorber, die meist in Kombination mit Katalysatoren wie beispielsweise Cobalt verwendet werden; Carbodiimide; weitere organische Absorber wie etwa schwach vernetzte Polyacrylsäure, Polyvinylalkohol, Ascorbate, Glucose, Gallussäure oder ungesättigte Fette und Öle.

Erfindungsgemäß können auch Mischungen aus zwei oder mehreren Trocknungsmaterialien eingesetzt werden.

Unter Trocknungsmitteln werden hier ausdrücklich nicht Silane verstanden, da Silane mit der Glasoberfläche chemisch reagieren und demgegenüber als Haftverstärker für Verklebungen auf Glas eingesetzt werden. Eine solcherart mit der Dünnglasfolie verbundene weitere Schicht könnte kaum mehr von der Dünnglasfolie abgelöst werden, ohne diese zu zerstören. Unter Silanen werden wiederum Verbindungen der allgemeinen Formel $R_a\text{-}Si\text{-}X_{4\text{-}a}$ oder deren partielle Kondensationsprodukte verstanden werden. In der Formel steht a für eine ganze Zahl von 0 bis 3 und bevorzugt für 0 oder 1. X steht für eine hydrolysierbare Gruppe, beispielsweise und bevorzugt für ein Halogen-Atom, insbesondere Chlor, eine Alkoxy-Gruppe wie beispielsweise eine Methoxy-, Ethoxy-, n-Propoxy-, iso-Propoxy-, n-Butoxy-, sec-Butoxy- oder tert-Butoxy-Gruppe oder für eine Acetoxy-Gruppe. Weitere, dem Fachmann bekannte Beispiele für hydrolysierbare Gruppen sind im Sinne der vorliegenden Erfindung ebenfalls einsetzbar. Sind mehrere Substituenten X vorhanden, so können diese gleich oder voneinander verschieden sein. R steht für einen gegebenenfalls substituierten Kohlenwasserstoffrest, beispielsweise für eine Methyl-, Ethyl-, n-Propyl-, iso-Propyl-, n-Butyl-, sec-Butyl-, tert-Butyl-Gruppe, eine Pentyl-Gruppe sowie deren verzweigte Isomere, eine Hexyl-Gruppe sowie die verzweigten Isomere, eine Heptyl-Gruppe sowie die verzweigten Isomere, eine Octyl-Gruppe sowie die verzweigten Isomere, eine Nonyl-Gruppe sowie die verzweigten Isomere, eine Decyl-Gruppe sowie die verzweigten Isomere, eine Undecyl-Gruppe sowie die verzweigten Isomere, eine Dodecyl-Gruppe sowie die verzweigten Isomere, eine Tetradecyl-Gruppe sowie die verzweigten Isomere, eine Hexadecyl-Gruppe sowie die verzweigten Isomere, eine Octadecyl-Gruppe sowie die verzweigten Isomere oder eine Eicosyl-Gruppe sowie die verzweigten Isomere. Die Kohlenwasserstoffreste können zudem ringförmige und/oder aromatische Bauteile enthalten. Repräsentative Strukturen dafür sind Cyclohexyl-, Phenyl- und Benzyl-Gruppen. Gegebenenfalls enthält/enthalten der/die Kohlenwasserstoffrest(e) R beispielsweise einen oder mehrere Heteroatom-haltige Substituenten wie Aminogruppen, Aminoalkylgruppen, Glycidyloxygruppen, (Meth)acryloxygruppen und dergleichen. Sind mehrere Substituenten R vorhanden, so können diese gleich oder voneinander verschieden sein.

Besonders bevorzugt ist das Trocknungsmittel ausgewählt aus der Gruppe umfassend Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumcarbonat, Natriumsulfat, Kaliumcarbonat, Zeolithe, Calcium, Magnesium, Bariumoxid, Calciumoxid, Magnesiumoxid, Natriumoxid, Kaliumoxid, Strontiumoxid, Aktivkohle, Phosphorpentoxid, Calciumhydrid, Bariumhydrid, Strontiumhydrid, Natriumhydrid und Lithiumaluminiumhydrid, Kaliumhydroxid, Natriumhydroxid, Essigsäureanhydrid, Propionsäureanhydrid, Buttersäureanhydrid, Methyltetrahydrophthalsäureanhydrid und Carbodiimide sowie Mischungen von zwei oder mehreren der vorstehenden Substanzen. Diese Materialien weisen eine hohe Sorptionskapazität gegenüber Wasser auf.

Unter "Carbodiimiden" werden Verbindungen der allgemeinen Formel $R^1$-N=C=N-$R^2$ verstanden, wobei $R^1$ und $R^2$ organische Reste, insbesondere Alkyl- oder Arylreste sind, die gleich oder verschieden sein können.

Ganz besonders bevorzugt ist das Trocknungsmittel ausgewählt aus der Gruppe umfassend Barium, Calcium, Calciumsulfat, Calciumchlorid, Calciumoxid, Natriumsulfat, Kaliumcarbonat, Kupfersulfat, Magnesiumperchlorat, Magnesiumsulfat, Lithiumchlorid und Zeolithe sowie Mischungen von zwei oder mehreren der vorstehenden Substanzen. Diese Trocknungsmittel bieten den Vorteil, dass sie sich leicht in die betreffende Schicht des Klebebands einarbeiten lassen, ein hohes Sorptionsvermögen zeigen und regenerierbare Trocknungsmittel sind. Darunter werden Substanzen verstanden, die Wasser unter bestimmten Bedingungen wieder abgeben können und dadurch in einen Zustand gelangen, der sie zu erneuter Wasseraufnahme befähigt. Dies ermöglicht ein Verfahren, bei dem das das Trocknungsmittel enthaltende Klebeband vor dem In-Kontakt-Bringen mit dem Flächengebilde von gegebenenfalls bis zu diesem Zeitpunkt aufgenommenem Wasser weitgehend befreit wird, beispielsweise durch Trocknen. Dadurch steht vorteilhaft bei Verwendung des Klebebands die volle Trocknungsmittelkapazität zur Verfügung.

Insbesondere ist das Trocknungsmittel ausgewählt aus der Gruppe umfassend Calciumoxid, Calciumsulfat, Calciumchlorid, pyrogene Kieselsäuren und Zeolithe sowie Mischungen von zwei oder mehreren der vorstehenden Substanzen. Diese Materialien weisen besonders hohe Kapazitäten für die Aufnahme von Wasser auf, sind größtenteils regenerierbar, lassen sich hervorragend in das Klebeband einarbeiten und beeinträchtigen die Funktion der einzelnen Schichten gar nicht beziehungsweise nur in vernachlässigbarer Art und Weise.

In einer besonderen Ausführungsform der Erfindung ist das Trocknungsmittel ausgewählt aus Calciumoxid, Calcium, Eisen, Barium, Lithiumchlorid und Cobaltchlorid. Diese Substanzen lassen über eine Änderung ihrer optischen Eigenschaften Rückschlüsse auf den Wassergehalt des Flächengebildes zu. So lange also noch freie Trocknungsmittelkapazität anhand des optischen Erscheinungsbildes des Klebebands erkennbar ist, kann dies als Indiz dafür gelten, dass noch kein oder allenfalls wenig Wasser in das zu schützende Flächengebilde diffundiert ist. Metallisches Calcium beispielsweise verliert seine metallisch-undurchsichtige Erscheinung und wird zunehmend transparent; Cobaltchlorid ändert seine Farbe bei Wasseraufnahme von blau zu rosa. Insbesondere wird das Trocknungsmittel Calciumoxid verwendet.

Vorteilhaft beträgt der Anteil des Trocknungsmittels in der das Trocknungsmittel enthaltenden Klebemasseschicht jeweils mindestens 1 Gew.-%, bevorzugt mindestens 10 Gew.-%, jeweils bezogen auf das Gewicht der Trocknungsmittelschicht. Der maximale Anteil des Trocknungsmittels in der das Trocknungsmittel enthaltenden Schicht des Klebebands ist jeweils nicht begrenzt und kann bis zu einer Schicht aus reinem Trocknungsmittel reichen.

Der Gehalt hängt wesentlich von der gewünschten Aufnahmekapazität für das Wasser ab.

Wenn zum Beispiel nur eine geringe Aufnahmekapazität erforderlich ist, reicht gegebenenfalls die Verwendung eines Trocknungsmittels in einem geringen Gehalt aus und mit geringer Aufnahmekapazität. In einer bevorzugten Ausführungsform enthält die das Trocknungsmittel enthaltende Schicht beziehungsweise enthalten die das Trocknungsmittel enthaltenden Schichten daher jeweils 1 bis 5 Gew.-% Trocknungsmittel. Ist diese Schicht die Klebemasse des Klebebands, hat dies auch den Vorteil, dass durch den geringen Anteil des Trocknungsmittels die Klebeigenschaften nicht wesentlich beeinträchtigt werden.

Bei einer sehr hohen erforderlichen Aufnahmekapazität des Klebebands muss jedoch ein relativ hoher Gehalt an Trocknungsmittel in der das Trocknungsmittel enthaltenden Schicht verwendet werden, wobei auch das Trocknungsmittel eine hohe Aufnahmekapazität besitzen sollte. Aber auch ein Trocknungsmittel mit geringer Aufnahmekapazität kann verwendet werden, wenn dies Kosten- oder Verträglichkeitsaspekte anraten. Im Rahmen einer weiteren bevorzugten Ausführungsform des erfindungsgemäßen Flächengebildes enthält dieses daher 20 bis 99 Gew.-%, bezogen auf das Gesamtgewicht des Klebebands.

Handelt es sich bei der das Trocknungsmittel enthaltenden Schicht um eine Klebemasse, so ist ein Gehalt von 10 bis 80 Gew.-% bevorzugt, damit ausreichende Klebeigenschaften erhalten bleiben. Soll jedoch die Reversibilität der Klebemasse erhöht oder erst hergestellt werden, ist ein Gehalt von 50 bis 95 Gew.-% vorteilhaft, jeweils bezogen auf das Gesamtgewicht der das Trocknungsmittel enthaltenden Klebemasse.

Bevorzugt weist das Klebeband einen Wassergehalt von weniger als 1000 ppm, besonders bevorzugt von weniger als 100 ppm auf. Die Angabe ppm bezieht sich dabei auf die Relation des enthaltenden Gesamtgewichts an Wasser zum Gewicht des Klebebands. Der Wassergehalt kann nach DIN EN ISO 62 (gravimetrisches Verfahren, Methode 4) oder DIN 53715 (Karl-Fischer-Titration) nach Lagerung des Prüflings über 24 Stunden bei 23 °C und 50 % relativer Luftfeuchte bestimmt werden. Bei geringen Wassergehalten wird die Kapazität der Trocknungsmaterialien des Klebebands nicht so stark durch aus dem Klebeband selbst diffundierendes Wasser beansprucht, und das Klebeband kann seine Funktion als Schutz- beziehungsweise Trocknungsvorrichtung besser erfüllen.

Besonders vorteilhaft weist zumindest eine Schicht des Klebebandes, besonders bevorzugt mindestens eine der äußeren Schichten des Klebebandes, ganz besonders bevorzugt die zur Auflage auf der Glasfolie vorgesehene Klebemassenschicht eine geringe Wasserdampfpermeationsrate für das zu immobilisierende Wasser auf. Die Wasserdampfpermeationsrate (WVTR) beträgt bevorzugt weniger als 50 g/(m$^2$*d), besonders bevorzugt weniger als 20 g/(m$^2$*d), bezogen auf eine Schichtdicke von 50 $\mu$m. Die WVTR wird dabei bei 38 °C und 90 % relativer Luftfeuchtigkeit nach ASTM F-1249 gemessen.

Durch die geringe Wasserdampfpermeationsrate diffundiert insbesondere bei der Herstellung des Klebebands weniger Wasser aus der Umgebung durch die betreffende(n) Schicht(en) hindurch in die das Trocknungsmaterial enthaltende Schicht des Klebebands, das somit seine Funktion trotz geringem Gettergehalt länger erfüllen oder mit einer noch geringeren Menge an Trocknungsmaterial ausgerüstet werden kann, was Kosten spart. Besonders bevorzugt weisen daher zumindest die beiden äußeren Schichten des Klebebandes eine geringe Wasserdampfpermeationsrate für das zu immobilisierende Wasser auf.

Als (Haft-)Klebemassen mit inhärenter Barrierewirkung, insbesondere als solche (Haft-)Klebemassen, die bei einer Dicke von 50 $\mu$m eine Wasserdampfpermeationsrate von weniger als 50 g/(m$^2$*d) aufweisen, lassen sich beispielweise - ohne die Absicht einer Einschränkung auf die genannten Beispiele - solche Klebemassen einsetzen, wie sie in den Schriften DE 10 2010 043 871 A1, DE 10 2010 043 866 A1, DE 10 2008 060 113 A1, DE 10 2008 062 130 A1, DE 10 2008 047 964 A1, DE 10 2009 036 970 A1, DE 10 2009 036 968 A1, US 2009/0026934 A1, EP 1 469 054 B1 und EP 0 519 278 B2 offenbart werden.

Bevorzugt werden aufgrund der in der Regel relativ geringen Wasserdampfpermeationsrate Klebemassen auf der Basis von Synthesekautschuken eingesetzt, insbesondere auf der Basis von Polyisobutylen und dessen Copolymeren, Polybuten, Butylkautschuk, Styrolblockcopolymeren mit Polymerblöcken gebildet durch Polymerisation von 1,3-Dienen, insbesondere Butadien, Isobutylen und/oder Isopren, welche auch spezifisch oder vollständig hydrierte Polymerblöcke enthalten können, sowie Polyolefinen und deren Copolymeren (siehe auch DE 197 42 805 A1).

Bevorzugt ist die auf dem Flächengebilde aufliegende Klebemasse des Klebebands frei von Klebharzen. In der Regel wird dadurch die Reversibilität der Verklebung nochmals verbessert.

Vorzugsweise ist auf die Dünnglasfolie zusätzlich zur zumindest einen weiteren Schicht eine die Dünnglasoberfläche stabilisierende Beschichtung aufgebracht, insbesondere ist eine organische oder Sol-Gel-Beschichtung auf die Dünnglasoberfläche aufgebracht. Die Beschichtung vermindert auch die Diffusion von Wasser und Wasserdampf an die Glasoberfläche. Organische Beschichtungen können auch die Spannungsrisskorrosion verringern. Solche Beschichtungen sind zum Beispiel in H. Furuchi; Glass Technology Vol. 35 (No 6) 1994, Seiten 272 bis 275; M. Mizuhashi. et. al; Reports Res. Lab. Asahi Glass Co. ltd.; 36 [1] (1986). Seiten 1 bis 14 und H.K. Schmidt; 3'd Conference European Society of Glass Science and Technology (ESG); Würzburg 1995, offenbart.

Günstigerweise enthält eine reversible Klebemasse ein mit der Klebemasse unverträgliches Silan oder ein Silan, das keine kovalente, ionische oder koordinative Bindung mit der Klebemasse eingehen kann. Zum einen wird dadurch eine erhöhte Haftung der reversiblen Klebemasse an der Dünnglasfolie verhindert, zum anderen lagern sich aufgrund der Unverträglichkeit des Silans mit dem Klebemittel migrierfähige Silanmoleküle an der Klebemasseoberfläche ab und kommen somit in größeren Mengen mit der Dünnglasfolie in Kontakt. Aufgrund des Silanfilms auf dem Glas können Mikrorisse überbrückt werden, und die Glasstabilität kann erhöht werden.

In einer weiteren Ausführungsform der Erfindung weist die Klebemasseschicht ein hydrophobes Silan auf. Das hydrophobe Silan ist hier definiert als ein Silan mit mehr als sieben zusammenhängenden Kohlenstoffatomen, beispielsweise Octadecyldimethylchlorosilan.

Die Erfindung wird anhand von Ausführungsbeispielen in fünf Figuren beschrieben. Dabei zeigen:

Fig. 1     eine Schnittansicht eines schematischen Aufbaus eines erfindungsgemäßen Klebebandes für einen Dünnglasverbund,

Fig. 2     eine schematische Ansicht einer zweiten Ausführungsform eines erfindungsgemäßen Klebebandes für einen Dünnglasverbund,

Fig.3a    eine Prinzipzeichnung des gebogenen Dünnglasverbundes im Two-Point-Bending Test,

Fig.3b    eine schematische Ansicht der auf dem Dünnglasverbund angeordneten Dehnungsmessstreifen,

Fig. 3c    eine schematische seitliche Ansicht des gebogenen Dünnglases.

Zunächst wird die Herstellung von verschiedenen Klebemasseschichten beschrieben, die dann hinsichtlich ihrer Wasserdampfpermeationsrate und Klebkraft auf Floatglas untersucht werden.

Zur Herstellung von Klebemasseschichten wurden verschiedene Klebemassen aus einem Lösungsmittel auf einen Liner des Typs Silphan S75 M371 der Firma *Siliconature* mittels eines Laborstreichgeräts aufgebracht und dann getrocknet.

In der Tabelle 4 ist die Klebemasseschichtdicke nach dem Trocknen jeweils angegeben. Sie liegt bei 50 μm.

Die Trocknung erfolgte jeweils bei 120 °C über 30 min in einem Labortrockenschrank.

K1: Haftklebemasse

| 100 Teile | Tuftec P 1500 | SBBS, ein teilhydriertes Styrol-Butadien-Styrol-Blockcopolymer (SBS), mit 30 Gew.-% Blockpolystyrolgehalt der Firma Asahi. Das SBBS enthält ca. 68 Gew.-% Zweiblockgehalt. |
| 100 Teile | Escorez 5600 | Hydriertes KW-Harz mit einem Erweichungspunkt von 100 °C der Firma Exxon |
| 25 Teile | Ondina 917 | Weißöl aus paraffinischen und naphthenischen Anteilen der Firma Shell |

Als Lösungsmittel wurde ein Gemisch aus Toluol und Aceton im Verhältnis 2:1 verwendet.

K2: reversible Haftklebemasse

| 90 Teile | Butyl 100 | Butylkautschuk von Bayer, Isoprengehalt 0,9 Mol-% |
| 10 Teile | Hyvis 200 | Polybuten von BP Chemical |

Als Lösungsmittel wurde Siedegrenzbenzin verwendet.

K3: reversible Haftklebemasse

| 80 Teile | Butyl 100 | Butylkautschuk von Lanxess, Isoprengehalt 0,9 Mol-% |
| 10 Teile | Oppanol B 150 | Polyisobutylen (PIB) von BASF, Mn = 425.000 g/mol |
| 10 Teile | Regalite R 1100 | Hydriertes Kohlenwasserstoffharz der Fa. Eastman mit einem Erweichungspunkt von 100 °C |

Als Lösungsmittel wurde Siedegrenzbenzin verwendet.

K4: reversible Haftklebemasse

| 100 Teile | Levapren 700 | Polyethylenvinylacetat, Hersteller Bayer, Anteil Vinylacetat 70 Gew.-%. |
| 30 Teile | Levapren 800 | Polyethylenvinylacetat, Hersteller Bayer, Anteil Vinylacetat 80 Gew.-%. |
| 25 Teile | Levapren 450 | Polyethylenvinylacetat, Hersteller Bayer, Anteil Vinylacetat 45 Gew.-%. |

Als Lösemittel wurde Methylethylketon verwendet.

K5: strahlenaktiviert reversible Haftklebemasse

| 59 Teile | | Acrylatcopolymer bestehend aus 56 Gew.-% Butylacrylat, 40 Gew-% Methylacrylat, 2 Gew.-% Acrylsäure und 2 Gew.-% Benzoinacrylat, hergestellt in radikalischer Polymerisation nach dem in DE 195 20 238 C2 offengelegten Verfahren (Beispiel 1) |
| 0,4 Teile | AluminiumAcetylacetonat | |
| 28 Teile | Ebecryl 220 | hexafunktionelles, aromatisches Urethan-Acrylat-Oligomer der Firma Cytec |
| 12 Teile | PETIA | Pentaerythritoltri-tetraacrylate der Firma Cytec mit einem tri/tetra-Verhältnis von etwa 1:1 |

K6: reversible Haftklebemasse

| 85 Teile | Oppanol B 150 | PIB von BASF, Mn = 425.000 g/mol |
| 15 Teile | Oppanol B 50 | PIB von BASF, Mn = 120.000 g/mol |

Als Lösungsmittel wurde Siedegrenzbenzin verwendet.

Die Wasserdampfpermeationsrate (WVTR) der Haftklebemasseschichten wurde bei 38 °C und 90 % relativer Luftfeuchtigkeit nach ASTM F-1249 gemessen. ASTM F-1249 ist ein Standardtestverfahren zur Bestimmung der Wasserdampfpermeationsrate (ASTM International, 100 Barr Harbor Drive, PO Box C700, West Conshohokecken, PA 19428-2959, USA nach der aktuell gültigen Version vom 22. Juni 2006). Der in Tabelle 1 angegebene Wert der WVTR ist ein Mittelwert aus jeweils zwei Messungen. Der angegebene Wert ist auf eine Schichtdicke von 50 $\mu$m normiert.

Die Klebkräfte wurden auf Floatglas analog zur ISO 29862 (Methode 3) bei 23 °C und 50 % relativer Luftfeuchtigkeit bei einer Abzugsgeschwindigkeit von 300 mm/min und einem Abzugswinkel von 180° bestimmt. Als Verstärkungsfolie, auf die die jeweilige Klebemasseschicht aufgebracht wurde, wurde die weiter unten angegebene Polyesterfolie F1 verwendet. Die Polyesterfolie wurde auf den getrockneten Klebestreifen zunächst laminiert. Die Verklebung des Messstreifens, also der Folie mit der Klebmittelschicht wurde mittels einer Anrollmaschine bei einer Temperatur von 23 °C vorgenommen. Die Klebebänder wurden nach 24 Stunden Lagerung im oben genannten Klima abgezogen. Der angegebene Wert ist der Mittelwert aus drei Messungen.

Tabelle 1

| Bezeichnung | WVTR [g/m$^2$ d] | Klebkraft/Glas [N/cm] |
|---|---|---|
| K1 (nicht reversibel) | 68 | 6,9 |
| K2 | 44 | 1,5 |
| K3 | 18 | 2,0 |
| K4 | 155 | 1,2 |
| K5 | 569 | 1,7 vor / 0,2 nach UV |
| K6 | 6 | 0,9 |

Bei der Ermittlung der Klebkraft waren die Trocknungsmittel noch nicht in der Klebemasseschicht enthalten.

Zunächst ist deutlich zu erkennen, dass die Klebemasse K1 eine nicht reversible Haftklebemasse ist, während es sich bei den Klebemassen K2 bis K6 um reversible Haftklebemassen handelt. Reversible Haftklebemassen können leicht von Hand abgezogen werden, da sie eine Klebkraft von weniger als 3 N/cm, bevorzugt von weniger als 2,2 N/cm aufweisen.

Zur Herstellung der erfindungsgemäßen Trocknungsmittel enthaltenden Klebemasseschichten werden die Lösungen der Haftklebemassen mit einem Trocknungsmittel versetzt. Dabei werden die Trocknungsmittel mittels einer schnelllaufenden Dispergierscheibe eines Laborrührwerkes in die Klebemasselösungen eingearbeitet. Die Klebemasselösungen werden zuvor mittels ca. 1 mm großer Zeolithkugeln getrocknet, welche vor dem Beschichten wieder ausgefiltert werden.

Es wurden folgende Trocknungsmaterialien verwendet:

Tabelle 2

| Bezeichnung | Beschreibung | Handelsname | Lieferant |
|---|---|---|---|
| G1 | Calciumoxid | Calcium oxide nanopowder | Sigma-Aldrich |
| G2 | Zeolith 3A | Purmol 3 STH | Zeochem |

Als Trägermaterialschicht 30 für die Klebebänder wurden zwei Folien eingesetzt, eine Polyesterfolie F1 sowie eine Polyesterfolie mit anorganischer Barriereschicht F2, die nachfolgend aufgeführt sind:

Tabelle 3

| Bezeichnung | Beschreibung | Handelsname | Lieferant | Dicke [$\mu$m] | WVTR [g/m$^2$d] |
|---|---|---|---|---|---|
| F1 | Polyesterfolie | Melinex 723 | Dupon-Teijin-Films | 36 | 64 |
| F2 | Polyesterfolie mit anorganischer Barriereschicht | GX-P-F | Toppan Printing | 30 | 0,13 |

Die Herstellung der Klebebänder erfolgte abhängig vom Trägermaterial unterschiedlich.

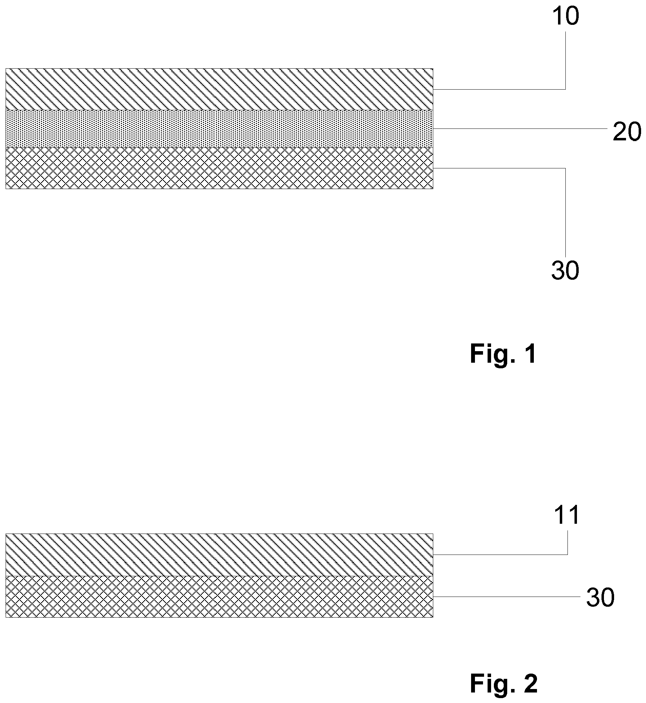

Zur Herstellung eines Aufbaus gemäß Fig. 2 werden bei Verwendung von Trägermaterial F1 die Lösungen direkt auf das Trägermaterial 30 beschichtet und vom Lösungsmittel getrocknet. Die getrocknetes Trocknungsmittel enthaltenden Klebemasseschichten 11 wurden jeweils nach dem Trocknen mit einem Liner temporär abgedeckt.

Zur Herstellung eines Aufbaus gemäß Fig. 2 werden bei Verwendung von Trägermaterial F2 die Lösungen auf den oben genannten Liner beschichtet und vom Lösungsmittel getrocknet. Die getrocknetes Trocknungsmittel enthaltenden Klebemasseschichten 11 wurden jeweils unverzüglich nach dem Trocknen bei noch erhöhter Temperatur (etwa 60 °C) mit dem Trägermaterial 2 mittels eines Laborwalzenlaminators laminiert.

Bei der Ausführungsform gemäß Fig. 1 wird vom Aufbau gemäß Fig. 2 der Liner entfernt und auf die nun offene Seite der Trocknungsmittel enthaltenden Schicht 20 eine äußere, direkt auf der Glasfolie aufliegende Klebemasseschicht 10 mittels eines Laborwalzenlaminators auflaminiert. Die Klebemasseschicht 10 enthält kein Trocknungsmaterial und wurde wie oben beschrieben mittels Beschichtung auf dem genannten Liner hergestellt.

Tabelle 4 zeigt gemäß der zweiten Ausführungsform in Fig. 2, aber auch gemäß der ersten Ausführungsform gemäß Fig. 1 hergestellte Klebebänder im Überblick. Gemäß der zweiten Ausführungsform sind die Klebebänder T1 bis T8 und T10 bis T16 hergestellt. Die Klebemassen K1, K4 und K5 weisen dabei eine WVTR von mehr als 50 g/m$^2$d (pro Quadratmeter und Tag) auf.

Lediglich Klebeband T9 wurde nach Fig. 1 hergestellt, wobei das Trocknungsmittel in Klebemasse K1 dispergiert und als "Schicht enthaltend Trocknungsmaterial 20" in einer Dicke von 40 $\mu$m verwendet wurde. Als Klebemasseschicht 10 wurde die reversible Klebemasse K4 verwendet.

Als Vergleichsbeispiel (V1) wurde ein Klebeband hergestellt, bei dem die Klebemasse gar kein Trocknungsmaterial enthält, die Klebemasse eine Wasserdampfpermeationsrate von mehr als 50 g/m$^2$d aufweist und die Trägermaterialschicht 30 eine Wasserdampfpermeationsrate von mehr als 10g/m$^2$d aufweist. (V1).

Es wurden noch weitere Klebebänder ohne Trocknungsmaterial hergestellt (V2, V3, V4), deren Klebemasse eine Wasserdampfpermeationsrate bei der Verwendung der Klebemasse K1 von mehr als 50 g/m$^2$d aufweist oder weniger als 50 g/m$^2$d, nämlich bei der Verwendung der Klebemasse K6. Die Trägermaterialschicht 30 weist entweder eine Wasserdampfpermeationsrate von mehr als 10g/m$^2$d auf, wenn die Trägerfolie F1 verwendet wird oder von weniger als 10g/m$^2$d, wenn die Trägerfolie F2 verwendet wird.

Tabelle 4

| Bezeichnung | Klebemasse | Gettermaterial | Anteil Getter [Gew.-%] | Dicke Klebemasse-schicht [$\mu$m] | Träger |
|---|---|---|---|---|---|
| T1 | K2 | G1 | 5 | 50 | F2 |
| T2 | K3 | G1 | 5 | 50 | F1 |

(fortgesetzt)

| Bezeichnung | Klebemasse | Gettermaterial | Anteil Getter [Gew.-%] | Dicke Klebemasse-schicht [μm] | Träger |
|---|---|---|---|---|---|
| T3 | K3 | G1 | 5 | 50 | F2 |
| T4 | K4 | G1 | 5 | 50 | F2 |
| T5 | K5 | G1 | 5 | 50 | F2 |
| T6 | K2 | G2 | 10 | 50 | F2 |
| T7 | K3 | G2 | 10 | 50 | F1 |
| T8 | K3 | G2 | 10 | 50 | F2 |
| T9 | K4 | G2 | 10 | 50 | F2 |
| T10 | K5 | G2 | 10 | 50 | F2 |
| T11 | K1 / K4 | G2 in K1 | 10 | K1: 40; K2: 10 | F2 |
| T12 | K1 | G2 | 10 | 50 | F2 |
| T13 | K6 | G2 | 10 | 50 | F1 |
| T14 | K6 | G2 | 10 | 50 | F2 |
| T15* | K6 | G2 | 10 | 50 | F2 |
| T16 | K5 | G2 | 10 | 50 | F2 |
| V3 | K6 | - | 0 | 50 | F1 |
| V4 | K6 | - | 0 | 50 | F2 |
| V2 | K1 | - | 0 | 50 | F2 |
| V1 | K1 | - | 0 | 50 | F1 |
| * Die Klebemasse K6 enthielt in Beispiel T15 zusätzlich 5 % Tetraethoxysilan, welches der Lösung nach der Zugabe des Trocknungsmittels zugesetzt wurde. | | | | | |

Die erfindungsgemäßen Klebebänder werden bis zur Lamination mit dem Dünnglas in einer permeationsdichten Verpackung zwischengelagert, indem sie in eine Aluminiumverbundfolie eingeschweißt werden. Die Muster für die Bestimmung des Wassergehaltes wurden nach 14 Tagen Lagerung entnommen.

Tabelle 5 zeigt die Bestimmung des Wassergehaltes nach 14 Tagen Lagerung (vierte Spalte von rechts). Die Bestimmung des Wassergehaltes erfolgt mit Hilfe der DIN 53715 (Karl Fischer Titration). Die Messung erfolgt in einem Karl Fischer Coulometer 851 in Verbindung mit einem Ovensampler (Ofentemperatur 140 °C). Mit einer Einwaage von ca. 0,3 g wurde jeweils eine Dreifachbestimmung durchgeführt. Als Wassergehalt wird der arithmetische Mittelwert der Messung angegeben.

Als Dünnglas wurde ein Glas des Typs D263 T der Firma Schott, Mainz, mit einer Dicke von 70 μm und einer Länge von 100 mm verwendet, die Breite betrug ebenfalls 100 mm.

Ein solches Dünnglas wurde mittels eines Laborrollenlaminators mit dem jeweiligen Klebeband bei Raumtemperatur nahezu vollflächig laminiert, lediglich an den Kanten quer zur Biegeachse wurde ein ca. 9 mm breiter Streifen freigelassen. Um Kanteneffekte auszuschließen, wurde ein stabilisierender, ca. 10 mm breiter Streifen des Klebebands tesa 50575 (80 μm dicke Aluminiumfolie mit Acrylathaftklebemasse) entlang beider Ränder der Dünnglasfolie quer zur Biegeachse verklebt, so dass er ca. 1 mm über den Glasrand hinaussteht. Diese Aluminiumstreifen kommen beim Biegetest auf der Außenseite des Biegeradius zu liegen und bewirken, dass die Glaskante unter Druckspannung gehalten wird, so dass die Gefahr von dort ausgehender Risse deutlich vermindert wird.

Anschließend wurde ein minimaler Biegeradius R ohne Lagerung (zweite Spalte von rechts in Tabelle 5) bestimmt.

Äquivalent hergestellte Verbunde aus Dünnglas und Klebeband wurden weiterhin über 28 Tage bei 60 °C und 90 % relativer Luftfeuchtigkeit mit einem Biegeradius von 100 mm gelagert, wobei die durch das Klebeband geschützte Seite des Glases auf der Außenseite des Radius lag und somit im Wesentlichen einer Zugspannung ausgesetzt wurde. Dann wurde der minimale Biegeradius nach Lagerung (Spalte ganz rechts in Tabelle 5) bestimmt.

Tabelle 5 zeigt den Vergleich der Biegeradien vor und nach der Lagerung in den beiden rechten Spalten. Des Weiteren wurde die Reversibilität der Klebemassen subjektiv beim Ablösen des Klebebandes vom Dünnglas beurteilt. Dazu wurde der Verbund mit seiner Glasseite mittels eines stark klebenden Klebebandes *tesa*® 4972 auf eine Stahlplatte geklebt und die Schutzfolie mittels aufgeklebter Anfasser von einer Ecke ausgehend abgezogen. Muster mit der Klebemasse K5 wurden zuvor mit einem UV-Cube der Fa. *Hoenle* mit einer UV-C-Dosis von 80 mJ/cm$^3$ im 250 bis 260 nm-Band vernetzt, um die Reversibilität herzustellen. Tabelle 5 zeigt die Ergebnisse:

Tabelle 5

| Klebeband | Wassergehalt Klebeband [ppm] | Reversibilität ++ sehr leicht ablösbar + leicht ablösbar o mit etwas Kraft ablösbar - mit hoher Kraft ablösbar | Biegeradius ohne Lagerung [mm] | Biegeradius nach Lagerung [mm] |
|---|---|---|---|---|
| T1 | 68 | + | 31 | 33 |
| T2 | 14 | + | 29 | 38 |
| T3 | 10 | + | 32 | 31 |
| T4 | 7 | + | 29 | 33 |
| T5 | 19 | ++ | 28 | 32 |
| T6 | 18 | + | 31 | 31 |
| T7 | 8 | + | 33 | 39 |
| T8 | 6 | + | 33 | 31 |
| T9 | 13 | + | 32 | 31 |
| T10 | 16 | ++ | 29 | 32 |
| T11 | 10 | + | 34 | 33 |
| T12 | 8 | - | 29 | 34 |
| T13 | 18 | ++ | 30 | 38 |
| T14 | 17 | ++ | 30 | 29 |
| T15 | 29 | + | 32 | 29 |
| T16 | 21 | ++ | 34 | 35 |
| V3 | 1588 | ++ | 31 | 39 |
| V4 | 1521 | ++ | 33 | 36 |
| V2 | 1966 | - | 34 | 37 |
| V1 | 2004 | - | 29 | 41 |

Die Ergebnisse zeigen, dass man mit dem erfindungsgemäßen Verfahren Dünnglas gut schützen kann. Dabei sind insbesondere die Ausführungsformen mit der Folie F2 für das Klebeband geeignet, da diese das Eindiffundieren von Feuchte in den Verbund erheblich vermindert.

Die Verwendung permeationshemmender Klebemassen K2, K3 und K6 bringt ebenfalls Vorteile gegenüber permeableren Klebemassen. Auch Klebebänder ohne Trocknungsmaterial, deren Trägermaterialschicht 30 die Folie F2 ist (V2, V4), zeigen noch schützende Wirkung, wohingegen diese bei Verwendung der Folie F1 (V1, V3) als Trägermaterialschicht 30 deutlich nachlässt, da bei den harschen Testbedingungen die Feuchte sehr leicht in den Verbund eindiffundieren kann.

Die Verwendung des Silans als Rissreparaturagens zeigt eine klare Wirkung, da der maximale Biegeradius deutlicher abnimmt, als den zufälligen Streuungen allein zugeordnet werden könnte.

Die Bestimmung des minimalen Biegeradius erfolgt mit Hilfe des Two-Point-Bending-Tests. Die Testmethode basiert auf der veröffentlichten *Corning* Methode von S.T. Gulati und dem Patent WO 2011/084323 A1 (Gulati et al., ID Symposium Digest of Technical Papers Vol 42, Issue 1, pages 652 to 654, June 2011).

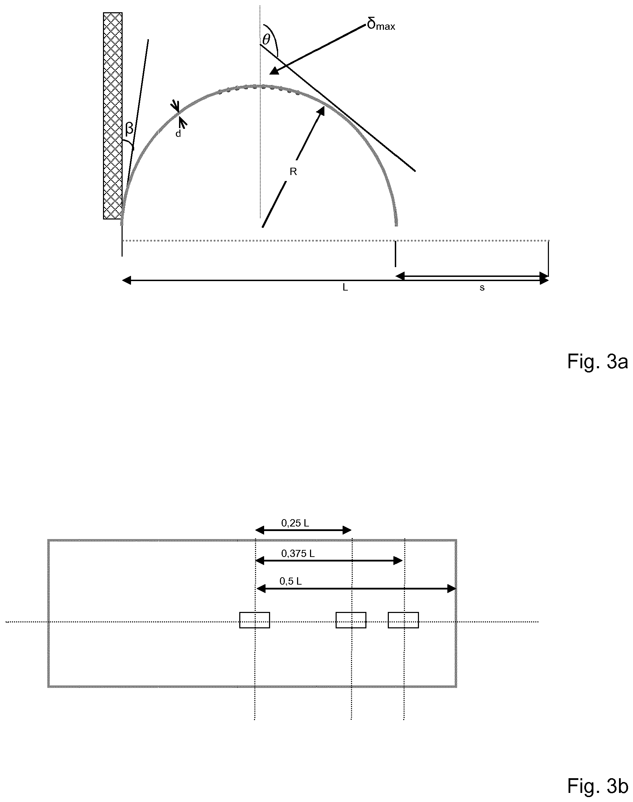

Die Flexibilität des Glas-Schutzfolienlaminats ist durch den Two-Point-Bending-Test charakterisierbar. Dabei misst und berechnet man den minimalen Biegeradius in Millimetern kurz vor dem oder genau im Bruchmoment. Das Laminat liegt mit der Schutzfolienseite nach oben und ist an einer Seite fixiert. Die andere Seite wird mit einer Geschwindigkeit von 10 mm/min in Richtung des fixierten Endes verschoben. Der dabei entstehende Biegeradius wird gemessen oder aus der Verschiebung berechnet. Der Testaufbau für den Two-Point-Bending-Test ist in Fig. 3a dargestellt. Eine gepunktete Linie 31 repräsentiert die Position und die Länge des Dünnglasverbundes vor der Biegung. Die durchgezogene Linie zeigt die Position des Dünnglasverbundes bei der minimalen Biegung im Moment des ersten auftretenden Risses quer zur Bewegungsrichtung.

L ist die Länge des Dünnglasverbundes 31, s die Distanz, welche das eine Ende des Dünnglasverbundes während des Biegevorgangs bis zum Bruch zurückgelegt hat. Die Dicke des Laminats ist mit d abgekürzt. β ist der Kontaktwinkel, welcher für die Berechnung der Biegespannung notwendig ist. Mit sinkendem Kontaktwinkel β, also mit sich verringerndem Radius R steigt die Spannung auf das Glas.

Der Radius R wird während des Versuchs abgemessen oder mit unten stehender Formel berechnet. Die Biegedehnung ε, welche zur Berechnung des Biegeradius R notwendig ist, wird mittels eines Dehnungsmessstreifens bestimmt oder berechnet.

Fig. 3b zeigt die Anordnung des Dehnungsmessstreifens im Zentrum des Dünnglasverbundes.

Der Biegeradius R wird aus der gemessenen Biegedehnung ε wie folgt berechnet:

$$\frac{R}{R+\frac{d}{2}} = \frac{L}{L+\Delta L}$$

$$\frac{R}{R+\frac{d}{2}} = \frac{1}{1+\frac{\Delta L}{L}} = \frac{1}{1+\varepsilon}$$

$$R + R\varepsilon = R + \frac{d}{2}$$

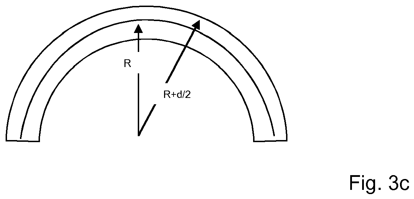

$R = \frac{d}{2\varepsilon}$ Mit der Biegedehnung $\varepsilon = \Delta L/L$ , L: ursprüngliche Länge und Länge der mittleren Phase des Dünnglasverbundes mit Radius R, und $\Delta L$ entspricht der Längenänderung der äußeren Phase des Dünnglasverbundes mit Radius R + $\frac{d}{2}$ in Fig. 3c.

Als minimaler Biegeradius R der Tabelle 5 wird der Medianwert von fünfzehn Messungen angegeben.

**Messmethoden**

Molekulargewicht:

Die Molekulargewichtsbestimmungen der zahlenmittleren Molekulargewichte $M_n$ und der gewichtsmittleren Molekulargewichte $M_w$ (oder der sonstigen Molekulargewichte) erfolgten mittels Gelpermeationschromatographie (GPC). Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 μ, $10^3$Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

Klebharzerweichungstemperatur:

Die Klebharzerweichungstemperatur wird nach der einschlägigen Methodik durchgeführt, die als Ring and Ball bekannt und nach ASTM E28 standardisiert ist.

Zur Bestimmung der Klebharzerweichungstemperatur der Harze kommt ein Ring-Kugel-Automat HRB 754 der Firma Herzog zum Einsatz. Harzmuster werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass das Harz nach dem Schmelzen den Zylinder ohne Überstand voll ausfüllt. Der resultierende Probekörper wird samt Zylinder in die Probehalterung des HRB 754 eingelegt. Zur Befüllung des Temperierbads wird Glycerin verwendet, sofern die Klebharzerweichungstemperatur zwischen 50 °C und 150 °C liegt. Bei niedrigeren Klebharzerweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über dieser eine Lichtschranke. Während des Messvorgangs wird die Temperatur mit 5 °C/min erhöht. Im Temperaturbereich der Klebharzerweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Klebharzerweichungstemperatur ist der Mittelwert aus den beiden Einzelmessungen.

**Bezugszeichenliste**

| | |
|---|---|
| 10 | äußere Klebemasseschicht |
| 11 | Trocknungsmittel enthaltende Klebemasseschicht |
| 20 | Trocknungsmittel enthaltende Klebemasseschicht |
| 30 | Trägermaterialschicht |
| 31 | Dünnglasverbund vor Biegung |
| d | Dicke des Dünnglasverbundes |
| s | Verschiebung des Dünnglasverbundes |
| L | Länge Dünnglasverbund |
| R | Radius / Biegeradius |
| β | Kontaktwinkel |
| δ | Biegespannung |
| ε | Biegedehnung |

**Patentansprüche**

1. Aufgerollter Dünnglasverbund mit einer Dünnglasfolie und mit wenigstens einer flächig auf eine Seite der Dünnglasfolie aufgebrachten Klebemasseschicht (10, 11, 20), wobei
   die wenigstens eine Klebemasseschicht (10, 11, 20) auf eine radial äußere Seite der aufgerollten Dünnglasfolie aufgebracht ist,
   **dadurch gekennzeichnet, dass** die wenigstens eine Klebemasseschicht (10, 11, 20) ein die Dünnglasfolie vor einer Spannungsrisskorrosion schützendes Trocknungsmittel enthält.

2. Aufgerollter Dünnglasverbund nach Anspruch 1,
   **dadurch gekennzeichnet, dass** ferner auf der radial äußeren Seite der aufgerollten Dünnglasfolie flächig eine Trägermaterialschicht (30) aufgebracht ist.

3. Aufgerollter Dünnglasverbund nach Anspruch 1 oder 2, **dadurch gekennzeichnet, dass** über die gesamte Ausdehnung der Dünnglasfolie unmittelbar auf die Dünnglasfolie vollflächig eine Klebeschicht (10, 11, 20) und unmittelbar auf die Klebeschicht (10, 11, 20) vollflächig eine Trägermaterialschicht (30) aufgebracht ist.

4. Aufgerollter Dünnglasverbund nach einem der vorstehenden Ansprüche,
   **dadurch gekennzeichnet, dass** die Klebemasseschicht (10, 11, 20) als autoadhäsive Schicht ausgebildet ist.

5. Aufgerollter Dünnglasverbund nach Anspruch 1,
   **dadurch gekennzeichnet, dass** eine direkt auf der Dünnglasfolie angeordnete Klebemasseschicht (10, 11) als reversible Haftklebemasseschicht ausgebildet ist.

6. Aufgerollter Dünnglasverbund nach einem der vorstehenden Ansprüche,
   **dadurch gekennzeichnet, dass** die Klebemasseschicht (10,11,20) ein mit der Klebemasse unverträgliches Silan enthält.

7. Aufgerollter Dünnglasverbund nach einem der Ansprüche 1 bis 5,
**dadurch gekennzeichnet, dass** die Klebemasseschicht (10,11,20) ein hydrophobes Silan aufweist.

8. Aufgerollter Dünnglasverbund nach einem der vorstehenden Ansprüche,
**dadurch gekennzeichnet, dass** ferner auf der radial äußeren Seite der aufgerollten Dünnglasfolie flächig eine Barriereschicht aufgebracht ist.

9. Aufgerollter Dünnglasverbund nach Anspruch 8,
**dadurch gekennzeichnet, dass** zwischen der Dünnglasfolie und der Klebemasseschicht (10, 11, 20) oder zwischen der Trägermaterialschicht (30) und der Klebemasseschicht (10, 11, 20) eine Metallschicht oder eine organische Beschichtung oder eine Sol-Gel-Beschichtung als Barriereschicht vorgesehen ist.

10. Aufgerollter Dünnglasverbund nach einem der vorstehenden Ansprüche,
**dadurch gekennzeichnet, dass** die Dünnglasfolie eine Dicke von 15 bis 200 $\mu$m, vorzugsweise 20 bis 100 $\mu$m, besonders bevorzugt 25 bis 75 $\mu$m aufweist.

11. Aufgerollter Dünnglasverbund nach einem der vorstehenden Ansprüche,
**dadurch gekennzeichnet, dass** das Trocknungsmittel Salz wie Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumdithionit, Natriumcarbonat, Natriumsulfat, Kaliumdisulfit, Kaliumcarbonat oder Magnesiumcarbonat; Schichtsilikat wie Montmorillonit oder Bentonit; Metalloxid wie Bariumoxid, Calciumoxid, Eisenoxid, Magnesiumoxid, Natriumoxid, Kaliumoxid, Strontiumoxid, Aluminiumoxid oder Titandioxid; Kohlenstoffnanoröhrchen, Aktivkohle, Phosphorpentoxid; leicht oxidierbares Metall wie beispielsweise Eisen, Calcium, Barium, Natrium oder Magnesium; Metallhydrid wie beispielsweise Calciumhydrid, Bariumhydrid, Strontiumhydrid, Natriumhydrid oder Lithiumaluminiumhydrid; ein Hydroxid wie Kaliumhydroxid oder Natriumhydroxid; Metallkomplex wie zum Beispiel Aluminiumacetylacetonat; Kieselgur; Zeolith; Anhydrid von einfacher oder mehrfacher Carbonsäure wie Essigsäureanhydrid, Propionsäureanhydrid, Buttersäureanhydrid oder Methyltetrahydrophthalsäureanhydrid; ein Carbodiimid; schwach vernetzte Polyacrylsäure, Polyvinylalkohol, Ascorbat, Glucose, Gallussäure, ungesättigtes Fett, Öl oder eine Mischung aus zwei oder mehreren davon ist.

12. Aufgerollter Dünnglasverbund nach Anspruch 11,
**dadurch gekennzeichnet, dass** das Trocknungsmittel ausgewählt ist aus der Gruppe umfassend Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Aluminiumsulfat, Calciumsulfat, Kupfersulfat, Bariumsulfat, Magnesiumsulfat, Lithiumsulfat, Natriumsulfat, Cobaltsulfat, Titansulfat, Natriumcarbonat, Natriumsulfat, Kaliumcarbonat, Zeolith, Calcium, Barium, Magnesium, Bariumoxid, Calciumoxid, Magnesiumoxid, Natriumoxid, Kaliumoxid, Strontiumoxid, Aktivkohle, Phosphorpentoxid, Calciumhydrid, Bariumhydrid, Strontiumhydrid, Natriumhydrid, Lithiumaluminiumhydrid, Kaliumhydroxid, Natriumhydroxid, Essigsäureanhydrid, Propionsäureanhydrid, Buttersäureanhydrid, Methyltetrahydrophthalsäureanhydrid, ein Carbodiimid sowie eine Mischung von zwei oder mehreren der vorstehenden Substanzen.

13. Aufgerollter Dünnglasverbund nach Anspruch 11,
**dadurch gekennzeichnet, dass** das Trocknungsmittel ausgewählt ist aus der Gruppe umfassend Barium, Calcium, Calciumsulfat, Calciumchlorid, Calciumoxid, Natriumsulfat, Kaliumcarbonat, Kupfersulfat, Magnesiumperchlorat, Magnesiumsulfat, Lithiumchlorid, Zeolith sowie eine Mischung von zwei oder mehreren der vorstehenden Substanzen.

14. Aufgerollter Dünnglasverbund nach Anspruch 11,
**dadurch gekennzeichnet, dass** das Trocknungsmittel ausgewählt ist aus der Gruppe umfassend Calciumoxid, Calciumsulfat, Calciumchlorid, Zeolith sowie eine Mischung von zwei oder mehreren der vorstehenden Substanzen.

15. Aufgerollter Dünnglasverbund nach Anspruch 11,
**dadurch gekennzeichnet, dass** das Trocknungsmittel ausgewählt ist aus Calciumoxid, Calcium, Eisen, Barium, Lithiumchlorid, Cobaltchlorid sowie einer Mischung von zwei oder mehreren der vorstehenden Substanzen.

16. Verfahren zum Lagern einer Dünnglasfolie, indem
eine Dünnglasfolie bereitgestellt wird, auf wenigstens eine Seite der Dünnglasfolie flächig wenigstens eine Klebemasseschicht (10, 11, 20) aufgebracht wird und ein Dünnglasverbund aus der Dünnglasfolie und der wenigstens einen Klebemasseschicht (10, 11, 20) so aufgerollt wird, dass die wenigstens eine Klebemasseschicht (10, 11, 20) auf eine radial äußere Seite der aufgerollten Dünnglasfolie aufgebracht ist,
**dadurch gekennzeichnet, dass** der wenigstens einen Klebemasseschicht (10, 11, 20) vor dem Aufbringen auf die Dünnglasfolie ein die Dünnglasfolie vor einer Spannungsrisskorrosion schützendes Trocknungsmittel zugeführt wird.

17. Verfahren nach Anspruch 16,
**dadurch gekennzeichnet, dass** auf wenigstens einer Seite der Dünnglasfolie flächig wenigstens eine Klebemasseschicht (10, 11, 20) und eine Trägermaterialschicht (30) aufgebracht wird.

18. Verfahren nach Anspruch 16 oder 17,
**dadurch gekennzeichnet, dass** die Klebemasseschicht (10, 11, 20,) mit einem mit dem Klebemittel unverträglichen Silan versehen wird.

## Claims

1. Rolled up thin glass composite comprising a thin glass film and at least one layer (10, 11, 20) of adhesive applied over the surface of one side of the thin glass film, wherein
the at least one layer (10, 11, 20) of adhesive is applied to a radially outer side of the rolled up thin glass film,
**characterized in that** the at least one layer (10, 11, 20) of adhesive comprises a desiccant which protects the thin glass film against stress corrosion cracking.

2. Rolled up thin glass composite according to Claim 1,
**characterized in that** a carrier material layer (30) is further applied over the surface of the radially outer side of the rolled up thin glass film.

3. Rolled up thin glass composite according to Claim 1 or 2,
**characterized in that** over the entire extent of the thin glass film, an adhesive layer (10, 11, 20) is applied over the full area directly to the thin glass film, and a carrier material layer (30) is applied over the full area directly to the adhesive layer (10, 11, 20).

4. Rolled up thin glass composite according to any of the preceding claims,
**characterized in that** the layer (10, 11, 20) of adhesive is formed as an autoadhesive layer.

5. Rolled up thin glass composite according to Claim 1,
**characterized in that** a layer (10, 11) of adhesive arranged directly on the thin glass film is formed as a reversible layer of pressure-sensitive adhesive.

6. Rolled up thin glass composite according to any of the preceding claims,
**characterized in that** the layer (10, 11, 20) of adhesive comprises a silane incompatible with the adhesive.

7. Rolled up thin glass composite according to any of Claims 1 to 5,
**characterized in that** the layer (10, 11, 20) of adhesive has a hydrophobic silane.

8. Rolled up thin glass composite according to any of the preceding claims,
**characterized in that** a barrier layer is further applied over the surface of the radially outer side of the rolled up thin glass film.

9. Rolled up thin glass composite according to Claim 8,
**characterized in that** between the thin glass film and the layer (10, 11, 20) of adhesive or between the carrier material layer (30) and the layer (10, 11, 20) of adhesive there is a metal layer or an organic coating or a sol-gel coating as barrier layer.

10. Rolled up thin glass composite according to any of the preceding claims,
**characterized in that** the thin glass film has a thickness of 15 to 200 $\mu$m, preferably 20 to 100 $\mu$m, more preferably 25 to 75 $\mu$m.

**11.** Rolled up thin glass composite according to any of the preceding claims,
**characterized in that** the desiccant is salt such as cobalt chloride, calcium chloride, calcium bromide, lithium chloride, lithium bromide, magnesium chloride, barium perchlorate, magnesium perchlorate, zinc chloride, zinc bromide, aluminum sulfate, calcium sulfate, copper sulfate, barium sulfate, magnesium sulfate, lithium sulfate, sodium sulfate, cobalt sulfate, titanium sulfate, sodium dithionite, sodium carbonate, sodium sulfate, potassium disulfite, potassium carbonate or magnesium carbonate; phyllosilicate such as montmorillonite or bentonite; metal oxide such as barium oxide, calcium oxide, iron oxide, magnesium oxide, sodium oxide, potassium oxide, strontium oxide, aluminum oxide or titanium dioxide; carbon nanotubes, activated carbon, phosphorus pentoxide; readily oxidizable metal such as, for example, iron, calcium, barium, sodium or magnesium; metal hydride such as, for example, calcium hydride, barium hydride, strontium hydride, sodium hydride or lithium aluminum hydride; a hydroxide such as potassium hydroxide or sodium hydroxide; metal complex such as aluminum acetylacetonate, for example; kieselguhr; zeolite; anhydride of single or multiple carboxylic acid such as acetic anhydride, propionic anhydride, butyric anhydride or methyltetrahydrophthalic anhydride; a carbodiimide; weakly crosslinked polyacrylic acid, polyvinyl alcohol, ascorbate, glucose, gallic acid, unsaturated fat, oils or a mixture of two or more thereof.

**12.** Rolled up thin glass composite according to Claim 11,
**characterized in that** the desiccant is selected from the group encompassing cobalt chloride, calcium chloride, calcium bromide, lithium chloride, lithium bromide, magnesium chloride, barium perchlorate, magnesium perchlorate, zinc chloride, zinc bromide, aluminum sulfate, calcium sulfate, copper sulfate, barium sulfate, magnesium sulfate, lithium sulfate, sodium sulfate, cobalt sulfate, titanium sulfate, sodium carbonate, sodium sulfate, potassium carbonate, zeolite, calcium, barium, magnesium, barium oxide, calcium oxide, magnesium oxide, sodium oxide, potassium oxide, strontium oxide, activated carbon, phosphorus pentoxide, calcium hydride, barium hydride, strontium hydride, sodium hydride, lithium aluminum hydride, potassium hydroxide, sodium hydroxide, acetic anhydride, propionic anhydride, butyric anhydride, methyltetrahydrophthalic anhydride, a carbodiimide, and also a mixture of two or more of the above substances.

**13.** Rolled up thin glass composite according to Claim 11,
**characterized in that** the desiccant is selected from the group encompassing barium, calcium, calcium sulfate, calcium chloride, calcium oxide, sodium sulfate, potassium carbonate, copper sulfate, magnesium perchlorate, magnesium sulfate, lithium chloride, zeolite, and also a mixture of two or more of the above substances.

**14.** Rolled up thin glass composite according to Claim 11,
**characterized in that** the desiccant is selected from the group encompassing calcium oxide, calcium sulfate, calcium chloride, zeolite, and also a mixture of two or more of the above substances.

**15.** Rolled up thin glass composite according to Claim 11,
**characterized in that** the desiccant is selected from calcium oxide, calcium, iron, barium, lithium chloride, cobalt chloride, and also a mixture of two or more of the above substances.

**16.** Method for storing a thin glass film, by
providing a thin glass film, at least one layer (10, 11, 20) of adhesive being applied over the surface of at least one side of the thin glass film and a thin glass composite comprising the thin glass film and the at least one layer (10, 11, 20) of adhesive being rolled up in such a way that the at least one layer (10, 11, 20) of adhesive is applied to a radially outer side of the rolled up thin glass film,
**characterized in that** the at least one layer (10, 11, 20) of adhesive, prior to application to the thin glass film, is supplied with a desiccant which protects the thin glass film against stress corrosion cracking.

**17.** Method according to Claim 16,
**characterized in that** at least one layer (10, 11, 20) of adhesive and a carrier material layer (30) is applied over the surface of at least one side of the thin glass film.

**18.** Method according to Claim 16 or 17,
**characterized in that** the layer (10, 11, 20) of adhesive is provided with a silane incompatible with the adhesive agent.

**Revendications**

**1.** Composite enroulé de verre mince présentant une feuille de verre mince et au moins une couche de masse adhésive (10, 11, 20) appliquée à plat sur une face de la feuille de verre mince, ladite au moins une couche de masse adhésive (10, 11, 20) étant appliquée sur une face radialement externe de la feuille enroulée de verre mince, **caractérisé en ce que** ladite au moins une couche de masse adhésive (10, 11, 20) contient un agent dessiccatif protégeant la feuille de verre mince contre une corrosion fissurante sous tension.

**2.** Composite enroulé de verre mince selon la revendication 1, **caractérisé en ce qu'**en outre une couche de matériau support (30) est appliquée à plat sur la face radialement externe de la feuille enroulée de verre mince.

**3.** Composite enroulé de verre mince selon la revendication 1 ou 2, **caractérisé en ce que**, sur toute l'étendue de la feuille de verre mince, une couche adhésive (10, 11, 20) est appliquée sur toute la surface directement sur la feuille de verre mince et une couche de matériau support (30) est appliquée sur toute la surface directement sur la couche adhésive (10, 11, 20).

**4.** Composite enroulé de verre mince selon l'une quelconque des revendications précédentes, **caractérisé en ce que** la couche de masse adhésive (10, 11, 20) est réalisée sous forme de couche autoadhésive.

**5.** Composite enroulé de verre mince selon la revendication 1, **caractérisé en ce qu'**une couche de masse adhésive (10, 11) disposée directement sur la feuille de verre mince est réalisée sous forme de masse autoadhésive réversible.

**6.** Composite enroulé de verre mince selon l'une quelconque des revendications précédentes, **caractérisé en ce que** la couche de masse adhésive (10, 11, 20) contient un silane incompatible avec la masse adhésive.

**7.** Composite enroulé de verre mince selon l'une quelconque des revendications 1 à 5, **caractérisé en ce que** la couche de masse adhésive (10, 11, 20) présente un silane hydrophobe.

**8.** Composite enroulé de verre mince selon l'une quelconque des revendications précédentes, **caractérisé en ce qu'**en outre une couche formant barrière est appliquée à plat sur la face radialement externe de la feuille enroulée de verre mince.

**9.** Composite enroulé de verre mince selon la revendication 8, **caractérisé en ce qu'**une couche métallique ou un revêtement organique ou un revêtement sol-gel est disposé(e) en tant que couche formant barrière entre la feuille de verre mince et la couche de masse adhésive (10, 11, 20) ou entre la couche de matériau support (30) et la couche de masse adhésive (10, 11, 20).

**10.** Composite enroulé de verre mince selon l'une quelconque des revendications précédentes, **caractérisé en ce que** la feuille de verre mince présente une épaisseur de 15 à 200 $\mu$m, de préférence de 20 à 100 $\mu$m, de manière particulièrement préférée de 25 à 75 $\mu$m.

**11.** Composite enroulé de verre mince selon l'une quelconque des revendications précédentes, **caractérisé en ce que** l'agent dessiccateur est un sel tel que le chlorure de cobalt, le chlorure de calcium, le bromure de calcium, le chlorure de lithium, le bromure de lithium, le chlorure de magnésium, le perchlorate de baryum, le perchlorate de magnésium, le chlorure de zinc, le bromure de zinc, le sulfate d'aluminium, le sulfate de calcium, le sulfate de cuivre, le sulfate de baryum, le sulfate de magnésium, le sulfate de lithium, le sulfate de sodium, le sulfate de cobalt, le sulfate de titane, le dithionite de sodium, le carbonate de sodium, le sulfate de sodium, le bisulfite de potassium, le carbonate de potassium ou le carbonate de magnésium ; un silicate à couches, tel que la montmorillonite ou la bentonite ; un oxyde métallique tel que l'oxyde de baryum, l'oxyde de calcium, l'oxyde de fer, l'oxyde de magnésium, l'oxyde de sodium, l'oxyde de potassium, l'oxyde de strontium, l'oxyde d'aluminium ou le dioxyde de titane ; des nanotubes de carbone, du charbon actif, du pentoxyde de phosphore ; un métal facilement oxydable, tel que par exemple le fer, le calcium, le baryum, le sodium ou le magnésium ; un hydrure métallique tel que par exemple l'hydrure de calcium, l'hydrure de baryum, l'hydrure de strontium, l'hydrure de sodium ou l'hydrure de lithium-aluminium ; un hydroxyde tel que l'hydroxyde de potassium ou l'hydroxyde de sodium ; un complexe métallique, tel que par exemple l'acétylacétonate d'aluminium ; du kieselguhr ; une zéolithe ; un anhydride d'un acide carboxylique simple ou multiple, tel que l'anhydride de l'acide acétique, l'anhydride de l'acide propionique, l'anhydride de l'acide butyrique ou l'anhydride de l'acide méthyltétrahydrophtalique ; un carbodiimide ; un poly(acide acrylique) faiblement réticulé, du poly(alcool vinylique), un ascorbate, du glucose, l'acide gallique et une graisse ou une huile insaturée ou un mélange de deux ou plus de ceux-ci.

**12.** Composite enroulé de verre mince selon la revendication 11, **caractérisé en ce que** l'agent dessiccateur est choisi dans le groupe comprenant le chlorure de cobalt, le chlorure de calcium, le bromure de calcium, le chlorure de lithium, le bromure de lithium, le chlorure de magnésium, le perchlorate de baryum, le perchlorate de magnésium, le chlorure de zinc, le bromure de zinc, le sulfate d'aluminium, le sulfate de calcium, le sulfate de cuivre, le sulfate de baryum, le sulfate de magnésium, le sulfate de lithium, le sulfate de sodium, le sulfate de cobalt, le sulfate de titane, le carbonate de sodium, le sulfate de sodium, le carbonate de potassium, une zéolithe, le calcium, le baryum, le magnésium, l'oxyde de baryum, l'oxyde de calcium, l'oxyde de magnésium, l'oxyde de sodium, l'oxyde de potassium, l'oxyde de strontium, le charbon actif, le pentoxyde de phosphore, l'hydrure de calcium, l'hydrure de baryum, l'hydrure de strontium, l'hydrure de sodium, l'hydrure de lithium-aluminium, l'hydroxyde de potassium, l'hydroxyde de sodium, l'anhydride de l'acide acétique, l'anhydride de l'acide propionique, l'anhydride de l'acide butyrique, l'anhydride de l'acide méthyltétrahydrophtalique, un carbodiimide ainsi qu'un mélange de deux ou plus des substances ci-dessus.

13. Composite enroulé de verre mince selon la revendication 11, **caractérisé en ce que** l'agent dessiccateur est choisi dans le groupe comprenant le baryum, le calcium, le sulfate de calcium, le chlorure de calcium, l'oxyde de calcium, le sulfate de sodium, le carbonate de potassium, le sulfate de cuivre, le perchlorate de magnésium, le sulfate de magnésium, le chlorure de lithium, une zéolithe ainsi qu'un mélange de deux ou plus des substances ci-dessus.

14. Composite enroulé de verre mince selon la revendication 11, **caractérisé en ce que** l'agent dessiccateur est choisi dans le groupe comprenant l'oxyde de calcium, le sulfate de calcium, le chlorure de calcium, une zéolithe ainsi qu'un mélange de deux ou plus des substances ci-dessus.

15. Composite enroulé de verre mince selon la revendication 11, **caractérisé en ce que** l'agent dessiccateur est choisi parmi l'oxyde de calcium, le calcium, le fer, le baryum, le chlorure de lithium, le chlorure de cobalt ainsi qu'un mélange de deux ou plus des substances ci-dessus.

16. Procédé pour entreposer une feuille de verre mince en ce qu'une feuille de verre mince est préparée, au moins une couche de masse adhésive (10, 11, 20) est appliquée à plat sur au moins une face de la feuille de verre mince et un composite de verre mince constitué par la feuille de verre mince et ladite au moins une couche de masse adhésive (10, 11, 20) est enroulé de manière telle que ladite au moins une couche de masse adhésive (10, 11, 20) est appliquée sur une face radialement externe de la feuille enroulée de verre mince, **caractérisé en ce que** ladite au moins une couche de masse adhésive (10, 11, 20) est additionnée, avant l'application sur la feuille de verre mince, d'un agent dessiccatif protégeant la feuille de verre mince contre une corrosion fissurante sous tension.

17. Procédé selon la revendication 16, **caractérisé en ce qu'**au moins une couche de masse adhésive (10, 11, 20) et une couche de matériau support (30) sont appliquées à plat sur au moins une face de la feuille de verre mince.

18. Procédé selon la revendication 16 ou 17, **caractérisé en ce que** la couche de masse adhésive (10, 11, 20) est pourvue d'un silane incompatible avec l'agent adhésif.

10

20

30

**Fig. 1**

11

30

**Fig. 2**

Fig. 3a

Fig. 3b

Fig. 3c

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2011084323 A1
- US 6815070 B1
- WO 2005110741 A1
- DE 1955853 A1
- EP 2363383 A1
- JP 2008273211 B
- DE 10200131 A1
- EP 2204355 A1
- WO 2008093153 A1
- WO 0041978 A1
- EP 1832558 A1
- DE 102008062130 A1
- DE 102008047964 A1
- DE 102008037866 A1
- DE 102008060113 A1
- DE 102010043866 A1
- DE 102010043871 A1
- DE 102009036970 A1
- DE 102008061840 A1
- WO 2005044560 A1
- DE 19742805 A1
- DE 102009036968 A1
- US 20090026934 A1
- EP 1469054 B1
- EP 0519278 B2
- DE 19520238 C2

### In der Beschreibung aufgeführte Nicht-Patentliteratur

- **MATTEO CICCOTTI.** Stress-corrosion mechanism in silicate glasses. *Journal of Physics D: applied Physics,* 2009, vol. 42
- **NACH CHANG.** *J. Adhesion,* 1991, vol. 34, 189-200
- **PAHL et al.** Praktische Rheologie der Kunststoffe und Elastomere. VDI-Verlag, 1995, 57-60, 119-127
- **DONATAS SATAS.** Handbook of Pressure Sensitive Adhesive Technology. Satas & Associates, 1999
- **CHANG.** *J. Adhesion,* 1991, vol. 34, 189-200
- **H. FURUCHI.** *Glass Technology,* 1994, vol. 35 (6), 272-275
- **M. MIZUHASHI.** Reports Res. Lab. Asahi Glass Co. ltd, 1986, vol. 36, 1-14
- **H.K. SCHMIDT;.** *3'd Conference European Society of Glass Science and Technology (ESG),* 1995
- **GULATI et al.** *ID Symposium Digest of Technical Papers,* Juni 2011, vol. 42 (1), 652-654